# EUROPEAN PATENT APPLICATION

(11) **EP 4 344 086 A1**
(43) Date of publication of application: **27.03.2024**
(21) Application number: 22197462.9
(22) Date of filing: 23.09.2022
(51) Int. Cl.: H04B 7/155, H04W 72/04

(54) **TRANSMISSION CONFIGURATION MECHANISMS FOR A NETWORK CONTROLLED REPEATER**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a communication device, a scheduling device and respective methods for a communication device and a scheduling device. For example, the communication device comprises a transceiver and circuitry. The transceiver, in operation: (i) relays signals; (ii) receives default relay configuration signalling; (iii) receives relay configuration signalling; and (iv) receives validity period signalling. The circuitry, in operation: (i) obtains, from the default relay configuration signalling, an indication of a default relay configuration that is to be used for the relaying of the signals by the transceiver outside validity periods; (ii) obtains, from the relay configuration signalling, an indication of another relay configuration; (iii) obtains, from the validity period signalling, an indication of a validity period of the other relay configuration; (iv) controls, in the validity period, the transceiver to perform the relaying in accordance with the other relay configuration; and (v) controls, after an end of the validity period, the transceiver to perform the relaying in accordance with the default relay configuration.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

### SUMMARY

One non-limiting and exemplary embodiment facilitates efficient relaying of signals between two entities by a third entity. In particular, efficient configuring of the relaying operation of the third entity may be facilitated.

In an embodiment, the techniques disclosed here feature an apparatus (e.g. communication device, in particular a relay apparatus). The apparatus comprises a transceiver and circuitry. The transceiver, in operation: (i) relays signals; (ii) receives default relay configuration signalling; (iii) receives relay configuration signalling; and (iv) receives validity period signalling. The circuitry, in operation: (i) obtains, from the default relay configuration signalling, an indication of a default relay configuration that is to be used for the relaying of the signals by the transceiver outside validity periods; (ii) obtains, from the relay configuration signalling, an indication of another relay configuration; (iii) obtains, from the validity period signalling, an indication of a validity period of the other relay configuration; (iv) controls, in the validity period, the transceiver to perform the relaying in accordance with the other relay configuration; and (v) controls, after an end of the validity period, the transceiver to perform the relaying in accordance with the default relay configuration.

It should be noted that general or specific embodiments may be implemented as a system, a method, an integrated circuit, a computer program, a storage medium, or any selective combination thereof. For instance, an integrated circuit can control a process of a relay node or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming scenario;
- **Fig. 6**: is a block diagram illustrating the functional communication structure of a relay node in a communication system in which the node relays signals between a base station and a UE;
- **Fig. 7**: is a schematic drawing illustrating the misalignment between the ON/OFF configuration intended by the base station and the actual ON/OFF configuration of the relay, after the relay misses an ON command that applies until a further/new ON/OFF command is received;
- **Fig. 8**: is a schematic drawing illustrating the misalignment between the relay transmission power intended by the base station and the actual relay transmission power of the relay, after the relay misses an transmission power control (TPC) command that applies until a further/new TPC command is received;
- **Fig. 9**: is a schematic drawing illustrating the misalignment between the configuration of the transmission direction of flexible slots intended by the base station and the actual transmission direction assumed by the relay, after the relay misses an indication of a slot format indicator (SFI) of flexible slots that applies until a further/new SFI is received;
- **Fig. 10**: is a block diagram of a communication system including a relay node and a base station with their respective exemplary functional structures;
- **Fig. 11**: is a block diagram illustrating an exemplary functional structure of the processing circuitry at the relay node side;
- **Fig. 12**: is a block diagram illustrating an exemplary functional structure of the processing circuitry at the base station side;
- **Fig. 13**: is a flow chart illustrating exemplary steps performed by a relay node as well as exemplary steps performed by a base station;
- **Fig. 14**: is a schematic drawing illustrating exemplary behavior of a relay configured with a validity period of 3 slots and the ON state as the default ON/OFF state;
- **Fig. 15**: is a schematic drawing illustrating exemplary behavior of a relay configured with a default transmission power of P1 and a validity period of 3 slots;
- **Fig. 16**: is a schematic drawing illustrating exemplary behavior of a relay configured with validity period of 2 slots and the UL state as the default state for the flexible slots;
- **Fig. 17**: is a schematic drawing illustrating different beam configurations of a relay;
- **Fig. 18**: is a schematic drawing illustrating exemplary behavior of a relay configured with a default BWP and a validity period of 3 slots;
- **Fig. 19**: is a schematic drawing illustrating exemplary behavior of a relay when using ON/OFF commands that include respective indications for the validity durations of configuration indicated by the respective command;
- **Fig. 20**: is a schematic drawing illustrating exemplary behavior of a relay, configured to (automatically) report the current transmission state if no relay configuration signalling is received for more than 2 slots, as well as exemplary behavior of a gNB of using the reported information;
- **Fig. 21**: is a schematic drawing illustrating exemplary behavior of a relay, configured to respond to report request by the gNB, as well as exemplary behavior of a gNB, requesting reports and using the reported information; and
- **Fig. 22**: is a schematic drawing illustrating exemplary behavior of a relay, configured with a periodic pattern of transmission state as the default relay configuration, when receiving transmission configuration signalling indicating the temporary extension/shortening of the active time of transmissions states.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

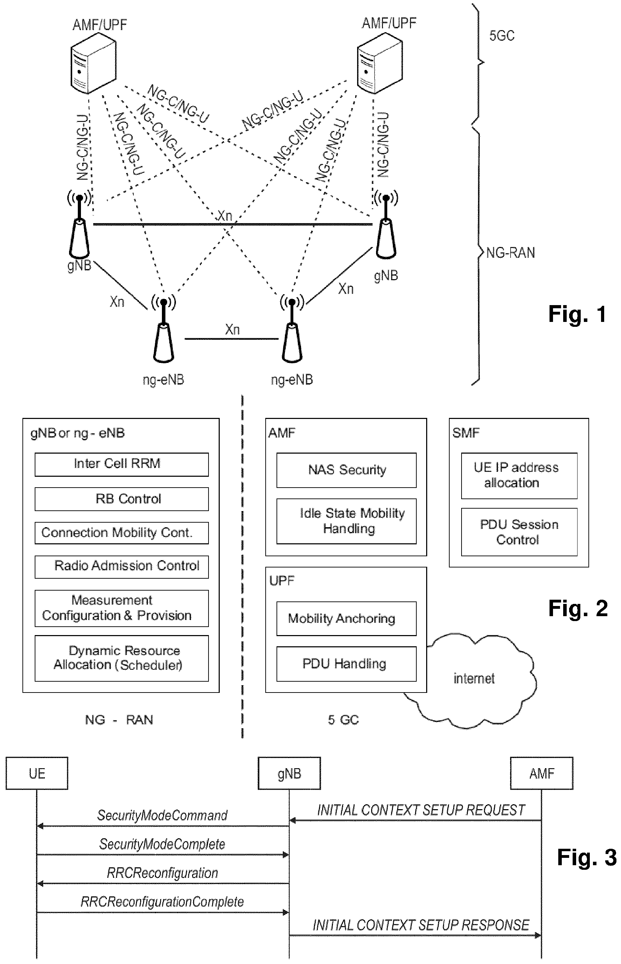

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0 or e.g. v16.2.0, section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology is summarized in 3GPP TS 38.211, v 15.7.0.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see e.g. TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

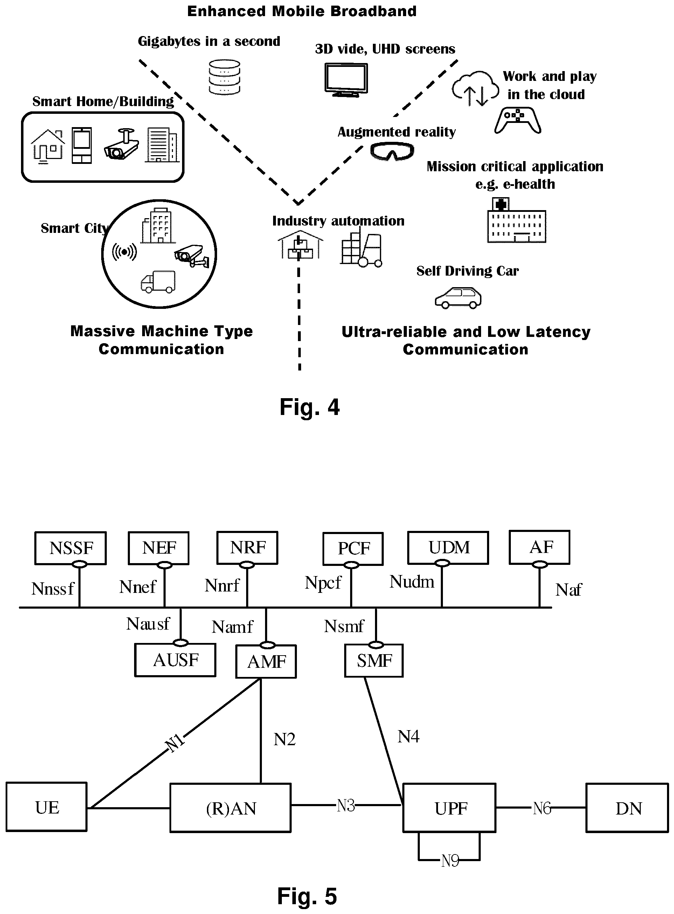

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sildelink control information (SCI) or the 2nd stage SCI.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS). Reference signals may be used at a receiving apparatus for estimating channel characteristics and/or for synchronization. One or more parameters of a reference signal may also be used to transmit data (control or payload) while another one or more parameters of the same reference signal may be used as the reference. For example, a reference signal may be used to compare the received power with the reference power. However, the reference signals may also be used to compare phase and/or frequency or the like.

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the described embodiment(s), and may be other numbers of symbols.

### Frequency Bands

The present disclosure may be applied to any of a licensed band and an unlicensed band. It is applicable for any frequency bands, but may be particularly advantageous for higher frequency bands due to the increasing benefits of beamforming. In particular, frequency bands for 5G NR are separated into two different frequency ranges. First, there is Frequency Range 1 (FR1), which includes sub-6 GHz frequency bands, some of which are traditionally used by previous standards, but have been extended to cover potential new spectrum offerings from 410 MHz to 7125 MHz. The other band is Frequency Range 2 (FR2), which includes frequency bands from 24.25 GHz to 52.6 GHz.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Physical Resource Block

In general, the term "*physical resource block*" (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

### Terminology

In the following, UEs, relay nodes, base stations (network nodes), and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### Terminal

A ***terminal*** or ***user terminal*** or ***user device*** or ***mobile station*** or ***mobile node*** is referred to in the LTE and NR as a ***user equipment (UE).*** This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the ***base station*** may be a Transmission Reception Point (TRP), a clusterhead, an access point, a Remote Radio Head (RRH), an eNodeB (eNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a ***scheduling node*** or ***network node***, e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term "*base station*" or "*radio base station*" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

### Relay Node

The term "***relay***" or "***relay node***" refers to a general node (in a communication system) or any communication device that is used to receive signals from one entity, amplify them and transmit them to another entity.

In other words, a relay may be any device controlled by a first entity (in the following usually assumed to be a base station/scheduling device/gNB) to relay signals between said first entity and a second entity (in the following usually assumed to be a UE). However, while a relay herein is described as amplifying signals between a base station (network node, scheduling device) and a user equipment, the relay of the present disclosure may be also used to amplify signals e.g. between two user equipments. In particular, a relay may be a UE, a base station (e.g. a gNB), an NCR, or an Integrated Access Backhaul (IAB).

For instance, a relay may be a RF (radio frequency) repeater, which does not perform baseband L1 processing such as demodulation and decoding or (H)ARQ, but merely receives, amplifies and re-sends the signals. However, the present invention is not limited thereto as the relay may also be a smart repeater, which performs demodulation, decoding, and/or error correction on signals before relaying them. In particular, the signal received by the relay from one entity that is to be relayed to another entity and the corresponding signal the relay transmits to said other entity may be identical (up to amplification) or may be different (e.g. in terms of modulation, but also e.g. due to error correction). Here, it should be noted that, in the present disclosure, (i) signals/transmissions received by the relay from one entity that are to be relayed to another entity are also referred to as "*signals*/*transmissions to be relayed*", and (ii) signals/transmissions of the relay node in which the relay relays a signal/transmission to be relayed as "***relay signals*/*****transmissions**".* In general, transmissions to be relayed may be (i) received from the gNB or (ii) be transmission received from said other entity and to be relayed to the gNB; and relay transmission may be (i) transmissions transmitted to the gNB or (ii) be transmission towards said other entity. Furthermore, it is noted that the present disclosure is applicable to relay irrespectively of its layer (RF, L1, L2, L3, etc), applicable frequency band, domain of multiplexing or the like.

In general, relay nodes serve for extending the coverage in a cell and/or to improve performance on a cell edge while enabling cost reduction in comparison with increasing the number of base stations (network nodes). In the downlink, a relay node may receive signals from a network node (e.g. a scheduling device or base station) in downlink, amplifies them, and transmits them further e.g. to one or more terminals. In the uplink, the relay node may receive signals from said one or more terminals, amplifies them, and transmits them further to a network node (e.g. a base station). Thus, a relay node may have a plurality of radio access interfaces, in particular:
- an interface for radio access with a UE (also referred to as access link),
- an interface for radio access with a base station (also referred to as backhaul link), and/or
- an interface for sending control information to and/or receiving control information from the base station (also referred to as C-link).

Conceptually a relay node can be implemented in any layer (e.g., RF, L1, L2, or L3). However, for the sake of efficiency and cost reduction, a more simple repeaters on physical layer may be desirable.

LTE relaying was different to the use of a repeater which merely re-broadcasts (as an RF relay does) signals and was thus less cost-efficient. For example, a L2 relay in LTE actually received, demodulated and decoded the data, applied any error correction, etc to it and then retransmitted a new signal. In this way, the signal quality could be enhanced with an LTE relay, rather than suffering degradation from a reduced signal to noise ratio when using a repeater. For an LTE relay, the UEs communicated with the relay node, which in turn communicated with a "donor" eNB. It was possible to have a time division multiplex or frequency multiplex for the links UE-relay and relay-BS. Some other relay options have been provided, none of which supported beamforming. The LTE relaying concept has not been widely adopted.

The 3GPP has recently defined a study item followed by a work item for network-controlled repeaters (NCR) in new radio, Rel. 18 (cf. 3GPP RP-213562, "New SI: Study on NR Smart Repeaters", RAN#94e, Dec. 2021, available freely at www.3gpp.org). Accordingly, a relay may be a repeater that can extend the network coverage and is supposed to be more cost efficient compared to the Integrated Access and Backhaul (IAB) that was introduced in Rel. 16.

One of the desirable features of network-controlled repeaters is the ability of beamforming. The LTE repeaters were designed to work in sub-3 GHz bands, in which beam forming is not required [TS 36.106]. This is one of key difference between the network-controlled repeaters and the LTE repeaters. The network-controlled repeater should support both outdoor and indoor scenarios.

Objectives of the study item for the network-controlled repeaters include the following features. Network-controlled repeaters (also known as smart repeaters) are to be used for extension of network coverage on FR1 FDD/TDD and FR2 TDD bands, while during the during the study, FR2 TDD developments may be prioritized for both, outdoor and O2I (outdoor-to-indoor) scenarios. The repeaters should be only single hop stationary smart repeaters that are to be transparent to UEs. In other words, there would be the signal paths gNB->sRelay->UE and UE->sRelay->gNB only (sRelay here referring to a smart relay, a smart repeater, or network-controlled repeater used in these examples exchangeably). The smart repeaters should be capable of maintaining the gNB-repeater link and repeater-UE link simultaneously. Cost efficiency is a key consideration.

The concepts that will need to be studied include identifying which side (control) information would be necessary or desirable for the smart repeaters that involve an assumption of maximum transmission power (as defined in L1). The side information may include beamforming information, timing information to align transmission/reception boundaries, information on uplink and downlink TDD configuration, ON-OFF information for efficient interference management and improved energy efficiency, power control information for interference management, and/or the like.

As mentioned above, the amplify-and-forward (AF) relays (RF repeaters) were also possible for LTE. Such relay is transparent in the system, it amplifies the received signal and forwards it to users. The relay itself does not know whether the amplified signal is a desired signal received from the UE/gNB, or whether it is merely an interference or noise. Hence, the relay may increase the inference in the system if it is not configured/deployed properly. The LTE RF repeater has been designed to work in sub-3 GHZ bands, in which beam forming was not required (cf. 3GPP TS 36.106, "Evolved Universal Terrestrial Radio Access (E-UTRA); FDD repeater radio transmission and reception, "version 17.0.0 available freely at www.3gpp.org). However, the network-controlled repeaters, considered for rel. 18, are supposed to work in both FR1 and FR2, with the possibility of beamforming. Hence, additional considerations should be taken for their design.

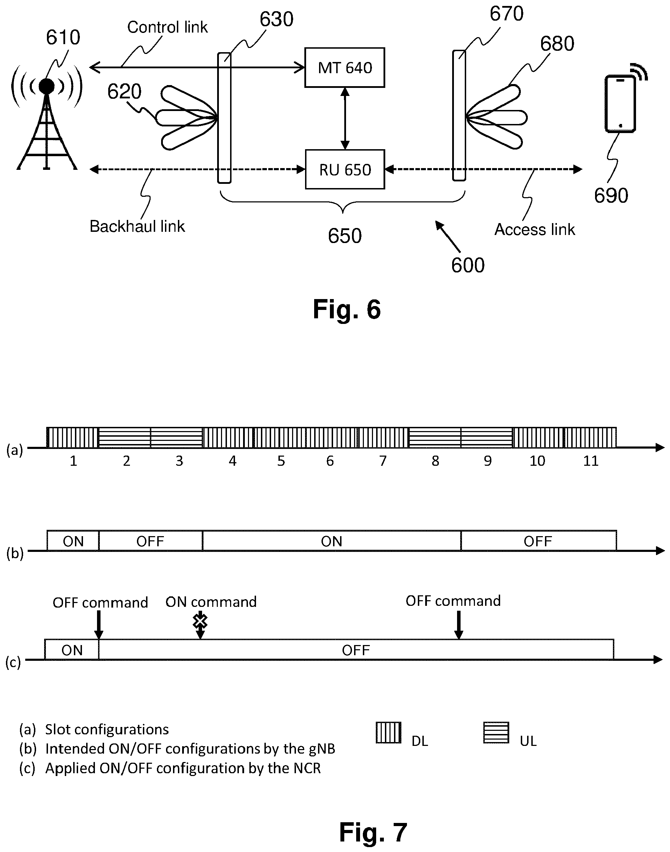

**Fig. 6** shows an exemplary design of a communication system 600 including a relay 650, which may be a network-controlled repeater (NCR) as envisaged currently for the NR. The relay 650 includes, as functional units, a mobile termination section (also referred to as mobile terminal or MT) 640 and a radio unit (RU) section 660. The MT section 640 may receive control signals/information from a network node (gNB) 610 and configures the RU section 660 accordingly.

It may also send information to the gNB 610. It is noted that the MT section 640 (which may be similar to a UE in its functionality) may use the channels described above (e.g. in Section "Downlink control channel monitoring, PDCCH, DCI" or others) to communicate with the gNB.

The RU section 660 is responsible for receiving and amplifying the signal (including data and/or control information), received from the gNB 610 and/or one or more (serving) UE(s) such as the UE 690 illustrated in the figure. In NR, the term currently used for the MT section is NCR-MT, and the term currently used for the RU section is NCR-Fwd (Fwd for forwarding).

In Fig. 6, the relay 650 also includes a transceiver which is illustrated by way of a first transceiver portion 630 that transmits signals/transmission 620 towards the gNB 610 or receives signals 620 from the gNB 610 (and possibly further gNBs) and a second transceiver portion 670 that transmits signals 680 towards one or more UEs 690 or receives signals 680 from one or more UEs 690. As indicated, the transmissions/signals may be transmitted/received through beams (e.g. may be directional transmission). However, the present disclosure is not limited thereto.

As also indicated in Fig. 6, in particular in NR, the link between the gNB (i.e., the device controlling the relay) and the MT for receiving/sending control information is also referred to as Control Link or C-link, the link between the gNB and RU for receiving/forwarding signals is referred to as Backhaul Link, and the link between the RU and the UE receiving/forwarding signals is referred to as Access Link.

Examples of control information for the NCR are control signals for ON-OFF, power control, and TDD UL/DL configurations. In general, semi-static and dynamic indications may be used for the ON/OFF signalling and/or the power control. Dynamic and semi-static indications both could be supported.

Regarding the TDD UL/DL configuration, flexible symbols could be supported by the NCR, e.g. the gNB could configure flexible slots/symbols dynamically or semi-statically (i.e., the gNB could send indications to the NCR indicating whether a flexible symbol/slot is a DL or a UL symbol/slot dynamically or semi-statically). Dynamic and semi-static indications both could be supported. In general, the NCR could also be configured to not amplify signals over flexible slots/symbols.

It is further noted that Fig. 6 illustrates an exemplary functional communication structure of the relay. In general, there may be one transceiver unit that handles the transmission and/or reception from/to any entity. Such transceiver may include a plurality of antennas and amplifiers and, possibly, further circuitry for effectuating transmission and reception of signals. It may include more than one transmission and/or reception portions so that simultaneous transmission and reception to one or more communication peers is possible.

### Further Improvements

As further explained with reference to Figs. 7 to 9 below, the inventors have identified problems when configuring a relay node.

Regarding the power control and ON-OFF functionalities of the NCR-Fwd, it may happen that the gNB is not aware of the actual transmission power or ON-OFF state of the NCR-Fwd in DL if the NCR misses a command from the gNB. For instance, as illustrated in row (b) of Fig. **7**, the gNB may intend to configure the NCR to be ON during slots 1, and 4-8, and to be OFF in slots 2, 3, and 9 to 11. Assuming that a received ON/OFF command will be applied by the relay until a new command is received, the gNB sends, as indicated in row (c), an OFF command to turn OFF the NCR after slot 1; it sends an ON command to turn ON the NCR after slot 3; and it sends an OFF command to turn OFF the NCR after slot 8. However, if the NCR misses e.g. the ON command after slot 3 as indicated by the cross in row (c) of Fig. 7, the NCR-Fwd remains OFF after slot 3 and applies the ON-OFF configuration shown in row (c) rather than the ON-OFF configuration intended by the gNB, shown in row (b). In other words, the NCR-Fwd will be in the ON state only in the first slot, and in the OFF state from slot 2 to slot 11. As indicated in row (a) of Fig. 7, which shows the slot format and the used numbering of the slots, slots 4 to 7 are used for DL transmission from the gNB (via the relay) to the UE. Thus, since the relaying of the signals in slots 4 to 7 is performed towards the UEs, the gNB may not be able (in particular not in time, e.g. before the UL slot 8) to identify that the ON command was not received by the relay and that DL relaying is not performed by the NCR-Fwd.

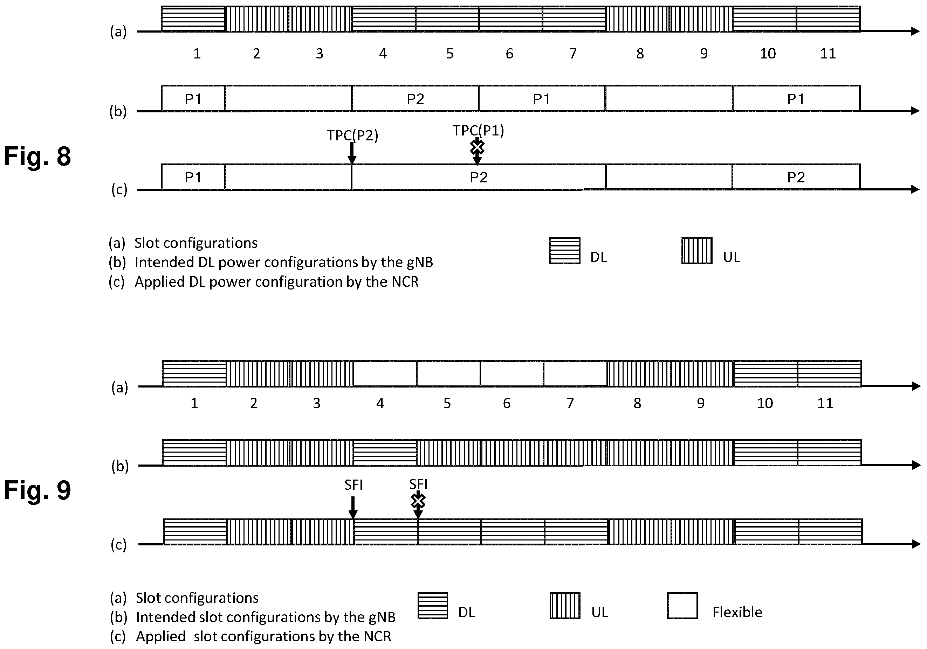

A similar problem exists for power control, especially, for DL transmissions. As an example, it is assumed that the gNB intends to configure the NCR with a different transmission (TX) power in DL over slots 4-5 as illustrated in row (b) of **Fig. 8****.** It is further assumed that a received command indicating a transmission power (here also referred to as Transmission power Control (TPC)) will be applied until a new TPC is received. As illustrated in row (c), the gNB thus sends a TPC to the NCR to configure TX power of P2 starting from slot 4; and it sends a TPC to the NCR to revert the TX power to P1 after slot 5. If the NCR misses the latter TPC, as indicated in row (c), the NCR applies the TX power of P2 (also) for the later transmissions. In other words, the relay applies the power configuration shown in row (c) rather than the power configuration intended by the gNB, shown in row (b). Since in DL, the NCR utilizes the wrong TX power for forwarding the signals towards the Ues, the gNB may not be aware of a missed TPC in time.

Furthermore, missing ON/OFF and TPC commands may not only be a problem in the DL case, but also in the UL case. For instance (as in the example of Fig. 9), if a UL relay transmission is not performed by the relay and received by the gNB, the gNB may not know if the NCR was in OFF state or if the UE missed a scheduling DCI for UL transmission.

As mentioned above, three different types of symbol types may be defined (as e.g. in NR): DL, UL, and flexible. A slot format may then specify e.g. for each slot/symbol, whether the slot/symbol is a DL, an UL, or a flexible slot/symbol. Slot format are often cell-common (e.g. apply to each UE in the cell), and different slot formats may be used for different frequency bands. DL slots are used for DL transmissions, UL slots are used for UL transmission, and the transmission direction in flexible slots is usually configured/indicated by the gNB as either for DL or UL in static, semi-static, or dynamic manners, where multiple of these indication methods may be supported at the same time. Flexible slots/symbols may be configured via dedicated signalling, i.e. a flexible slot may be configured as DL for one UE and as UL for another UE. For instance, flexible slots/symbols could be configured dynamically through a DCI, such as slot format indicator (SFI) that is delivered using DCI format 2_0.

As mentioned above, flexible symbol configurations for the NCR may be supported and/or the NCR could support relaying in flexible slots. However, while the support of flexible symbols facilities the scheduling, it can bring complexity as further explained with reference to Fig. 9.

As shown in row (a), the gNB as exemplarily assumed to configure slots 1, 10 and 11 as DL slots; slots 2, 3, 8 and 9 as UL slots, and slots 4 to 7 as flexible slots. In other words, row (a) shows the slot format. As shown in row (b), in case the gNB decides to allocate flexible slot 4 for DL and flexible slots 5-7 for UL, it may inform the NCR, e.g. using SFI(s). Thus, as indicated row (c), the gNB sends an SFI after slot 3 to configure slot 4 for DL and another SFI after slot 4 to configure slots 5-7 for UL.

However, if the NCR misses the second SFI, as also indicated row (c), the relay applies the slot configuration shown in row (c) rather than the slot configuration intended by the gNB, shown in row (b). However, since the NCR is supposed to relay signals towards the gNB in slots 5 to 7, the gNB may not be sure if the NCR missed the SFI or the UE missed a scheduling DCI for UL transmission. Furthermore, it is noted that the problem that the relay may miss an SFI command may not only be a problem in the UL case, but also in the DL case. For instance (as in the examples of Fig. 7 and 8), if a DL relay transmission is not performed, the gNB may not become aware that the relay did not perform the relay transmission since (in DL) the relay transmission is (supposed to be) performed towards the UE.

### Embodiments

The inventors have identified the possibility of providing improved procedures, for allowing to avoid one or more of the above described disadvantages. The present invention relates to different solutions and variants for such an improved procedure. Accordingly, the present disclosure provides techniques for increasing the efficiency of relaying, e.g. by providing an efficient mechanism of configuring a relay node, in particular in view of the possibility that the relay may not receive a relay configuration command (here also termed relay configuration signalling) from the gNB.

The present disclosure in particular provides scheduling devices, corresponding methods for scheduling devices, communication devices (e.g. adapted/configured to perform the function of a relay node in a communication system), corresponding methods and (computer) programs (e.g. stored on a memory) for communication devices, communications systems comprising such scheduling devices and communication devices, as well as integrated circuits which, in operation, control a processes of scheduling devices/communication devices to perform the respective methods.

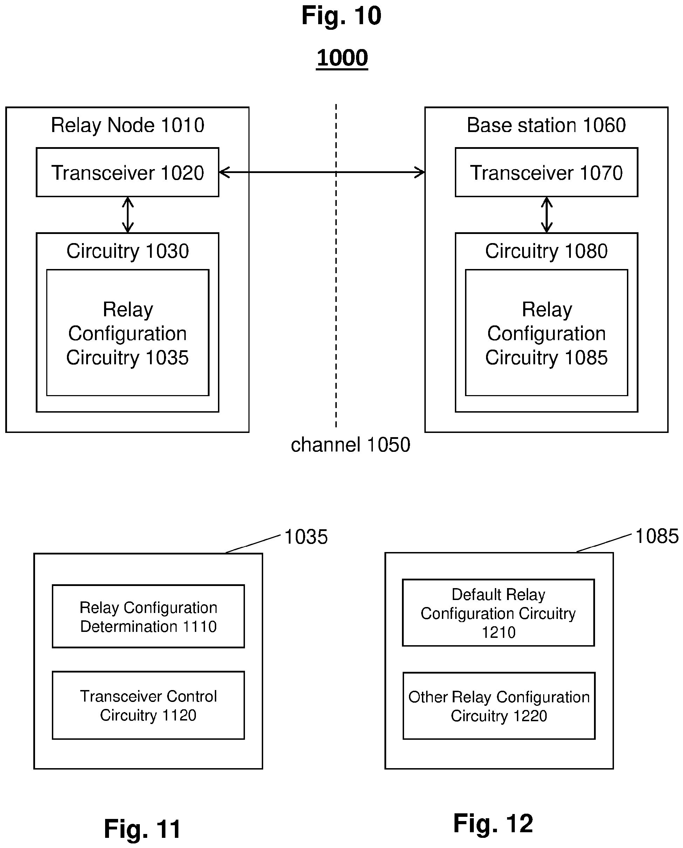

An example of such communication system is illustrated in **Fig. 10****.** The communication system 1000 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

**Fig. 10** illustrates a general, simplified and exemplary block diagram of a communication device 1010 (here exemplarily assumed to be a Relay Node) and a scheduling device 1060 (here exemplarily assumed to be located in a base station, e.g. in a LTE eNB (alternatively termed ng-eNB) or the gNB in 5G NR). However, in general, a scheduling device may also be a terminal in case of a sidelink connection between two terminals. Moreover, in particular with respect to the use cases of URLLC; eMBB, and mMTC, the communication device 1010 may also be a sensor device, a wearable device, or a connected vehicle, or a controller of an automated machine in an industrial factory. The communication device 1010 is assumed to be able to function as a relay between the base station and another communication device.

As illustrated in **Fig. 10****,** the communication device 1010 and the scheduling device 1060 (eNB/gNB) may communicate with each other over a (wireless) physical channel 1050 respectively using their transceivers 1020 (relay node side) and 1070 (base station side). Together, the scheduling device 1060 and the relay node 1010 form the communication system 1000. The communication system 1000 may further include other entities such as those shown in Fig. 1 and, in particular said other communication device towards which the relay node relays signals from the base station and/or from which the relay node receives signals to be relayed to the base station.

### Transceiver & Circuitry

As illustrated in **Fig. 10** (left-hand side), the communication device may comprise a transceiver and circuitry (or processing circuitry), and the scheduling device may comprise a transceiver and a (processing) circuitry.

The term "***transceiver***" refers to a front end including on or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term "*transceiver*" is used for hardware and software components that allow a communication device to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term "***circuitry***" herein refers to any hardware and/or software. For example the circuitry may include one or more processors (or processing units or any LSIs), microcontrollers, programmable hardware such as FPGAa and/or dedicated hardware such as ASICS or the line, possibly further including further digital or analog circuits.

Between the transceiver and the processing circuitry there may be an input/output point (or node or interface) over which the processing circuitry, in operation, can control the transceiver, i.e. control the receiver and/or the transmitter and exchange reception/transmission data. Accordingly, the processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

According to an exemplary embodiment, a communication device 1010 as e.g. illustrated in **Fig. 10** (left-hand side) is provided. The communication device 1010 comprises a transceiver 1020 and circuitry 1030. The transceiver 1020, in operation: (i) relays signals; (ii) receives default relay configuration signalling; (iii) receives relay configuration signalling, and (iv) receives validity period signalling. The(processing) circuitry, in operation: (i) obtains, from the default relay configuration signalling, an indication of a default relay configuration (in the present disclosure, also termed "***default relay configuration indication***") that is to be used for the relaying of the signals by the transceiver outside validity periods; (ii) obtains, from the relay configuration signalling, an indication of another relay configuration (in the present disclosure, also termed "***relay configuration indication***"); (iii) obtains, from the validity period signalling, an indication of a validity period of the other relay configuration (in the present disclosure, also termed "***validity period indication***"); (iv) controls, in the validity period, the transceiver to perform the relaying in accordance with the other relay configuration; and (v) controls, after an end of the validity period, the transceiver to perform the relaying in accordance with the default relay configuration.

For instance, the UE may obtain the default relay configuration indication, the relay configuration indication, and/or the validity period indication from the respective signalling by parsing said respective signalling and/or extracting the indication from the signalling.

It is noted that the circuitry 1030 may implement more functionality than the just-mentioned obtaining of the indications and the controlling of the transceiver to perform the relaying, as it may, for instance, further control the transceiver 1020 to receive the control signalling (in particular but not limited to the default relay configuration signalling, the relay configuration signalling validity period signalling) and/or to receive or transmit data other data (i.e. data that is transmitted/received not as part of the relaying, as e.g., the relay node may be a UE that receives (non-control) data of which it is the final recipient).

Thus, the circuitry 1030 is exemplarily considered to include Relay Configuration Circuitry 1035, which is configured to perform said obtaining and controlling of the relaying. The configuration may be provided by hardware adaption and/or by software.

**Fig. 11** shows an exemplary functional structure of the Relay Configuration Circuitry 1035. In particular, the Relay Configuration Circuitry 1035 may include Relay Configuration Determination Circuitry 1110 and Transceiver Control Circuitry 1120. Circuitry may be configured to perform the above-mentioned obtaining of the default relay configuration indication, the relay configuration indication, and the validity period indication. Circuitry 1110 may further be configured to determine (i) based on the default relay configuration indication, a default relay configuration; (ii) based on the relay configuration indication, a relay configuration indication; and/or (iii) based on the validity period indication validity periods of relay configurations (other than the default relay configuration, as further explained below). Furthermore, circuitry 1110 may be configured to determine which relay configuration is to be used at a given time (also further explained below)). Transceiver Control Circuitry 1120 may be responsible for the controlling of the transceiver to relay signals from and/or to the base station 1060 (e.g., in accordance with the relay configuration determined by the relay configuration circuitry to be valid at the given time).

It is noted that the Relay Configuration Circuitry 1035 may also implement more functionality, as it may, for instance, also determine resources (e.g. based on corresponding indication received from the base station) for relay transmissions and/or resources in which relay signals that are to be transmitted may be received.

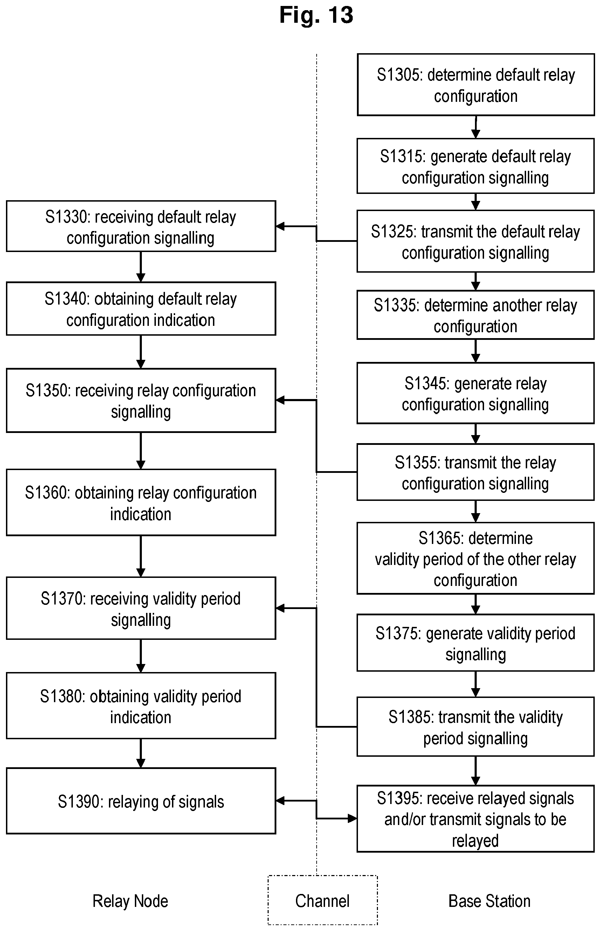

According to another exemplary embodiment, in correspondence with the above described communication device, a communication method to be performed by a communication device is provided. As shown in **Fig. 13**, the method comprises a step of: (i) receiving S1330 default relay configuration signalling; (ii) obtaining S1340, from the default relay configuration signalling, a default relay configuration indication; (iii) receiving S1350 relay configuration signalling; (iv) obtaining S1360, from the relay configuration signalling, a relay configuration indication; (v) receiving S1370 validity period signalling; (vi) obtaining S1380, from the validity period signalling, a validity period indication; (vii) relaying S1390, in the validity period, signals in accordance with the other relay configuration; and (viii) relaying S1390, after an end of the validity period, the signals in accordance with the default relay configuration.

As noted above, the relaying may be relaying of signals to the base station and/or relaying of signals from the base station. It is further noted that, in step S1390, in particular the relay transmissions are performed, by the relay node, in accordance with the other relay configuration (in the validity period) and the default relay configuration (outside validity periods).

According to another exemplary embodiment, in correspondence with the above described method for a communication device, an integrated circuit is provided. Said integrated circuitry, in operation, controls a process of a communication device, the process including the steps of the above method for the communication device. Said integrated circuitry may e.g. be the above described circuitry 1030 or 1035, and/or may be deployed/deployable in a communication device, in particular a relay node.

As also shown in Fig. 10 (right-hand side), according to another exemplary embodiment, a scheduling device 1060 is provided. The scheduling device 1060 comprises a transceiver 1070 and circuitry 1080. The (processing) circuitry 1080, in operation, (i) determines a default relay configuration that a communication device is to use for relaying signals outside validity periods of relay configurations; (ii) generates a default relay configuration signalling including a default relay configuration indication; (iii) determines another relay configuration, generates relay configuration signalling including a relay configuration indication; (iv) determines a validity period of the other relay configuration; and (v) generates validity period signalling including a validity period indication. The transceiver, in operation: (i) transmits the default relay configuration signalling; (ii) transmits the relay configuration signalling; (iii) transmits the validity period signalling; and (iv) receives relayed signals from the communication device and/or transmits signals to the communication device to be relayed (by the communication device).

The circuitry 1080 may implement more functionality than the just-mentioned determining and generating, as it may, for instance, further control the transceiver 1070 to transmit the control signalling (in particular to transmit said generated default relay configuration signalling, relay configuration signalling, and/or generates validity period signalling) and/or to receive or transmit data (e.g. to transmit signals to be relayed, to transmit relay transmission from the relay node). Thus, the circuitry 1080 is exemplarily considered to include Relay Configuration Circuitry 1085, which is configured to perform said determining and generating. The configuration may be provided by hardware adaption and/or by software.

An exemplary functional structure of Relay Configuration Circuitry 1085 is shown in **Fig. 12**. In particular, the Relay Configuration Circuitry 1085 may include Default Relay Configuration Circuitry 1210, which may responsible to determine the default transmission configuration of the relay node and to generate the corresponding default relay configuration signalling. The determining may include determining, e.g. after a predetermined time or in response to a change of the cell traffic, whether the default relay configuration is to be changed (and, if so, to determine a new default relay configuration). The Relay Configuration Circuitry 1085 may include further include Other Relay Configuration Circuitry 1220, which may be responsible for determining whether another relay configuration is to be used temporarily (e.g. for the corresponding validity time), to determine said other relay configuration, to determine the validity duration of said other relay configuration, to generate corresponding relay configuration signalling, and/or to generate corresponding validity period signalling.

It is noted that the Relay Configuration Circuitry 1085 may also implement more functionality, as it may, for instance also determine resources for relay transmissions and/or resources in which relay signals that are to be transmitted by the relay node, generate signalling(s) including indicating the determined resources, and/or control the transceiver 1070 to transit the generated signalling to the relay node.

Furthermore, in correspondence with the above described scheduling device, according to another exemplary embodiment, a communication method to be performed by a scheduling device is provided. As shown in **Fig. 13**, the method comprises the steps of: (i) determining (S1305) a default relay configuration that a communication device is to use for relaying signals outside validity periods of relay configurations; (ii) generating (S1315) a default relay configuration signalling including a default relay configuration indication; (iii) transmitting (S1325) the default relay configuration signalling; (iv) determining (S1335) another relay configuration; (v) generating (S1345) relay configuration signalling including a relay configuration indication; (vi) transmitting (S1355) the relay configuration signalling; (vii) determining (S1365) a validity period of the other relay configuration; (viii) generating (S1375) validity period signalling including a validity period indication; (xi) transmitting (S1385) the validity period signalling; and (x) receiving (S1395) relayed signals from the communication device and/or transmitting (S1395) signals to the communication device to be relayed.

According to another exemplary embodiment, in correspondence with the above described method for a scheduling device, an integrated circuit is provided. Said integrated circuitry, in operation, controls a process of a scheduling device, the process including the steps of the above method for the scheduling device. Said integrated circuitry may e.g. be the above described circuitry 1085 or 1080, and/or may be deployed/deployable in a communication device, in particular a scheduling device.

It is further noted that the order of the steps may be different than shown in Fig. 13 (this applies to both the relay node and the base station), and/or some of the steps may be performed together or even jointly. For instance, as further explained below, the base station may determine the other relay configuration and the validity period of said other relay configuration together/jointly and performs S1355 and S1385 in one step. Furthermore, any of the steps performed by the base station may in general be performed jointly with corresponding steps for other relay nodes, as well as in consideration of traffic conditions and quality requirements of services used by one or more UEs, which receive relay transmissions and/or transmit transmission to be relay to the relay node(s).

Moreover it is noted that, since the present disclosure relates to a (scheduling) device configuring a communication device (e.g. a relay node) and said communication device, the details and embodiments described herein apply to (and may be implemented by them) each of the communication device and the or scheduling device, as well as to the corresponding methods and integrated circuits unless explicit statement or context indicates otherwise. In particular, the scheduling device may be configured to generate and transmit the control signals as described below and the communication device may be configured to receive such signalling and obtain the respective indications therefrom. In particular, any of the steps/operations described below may be performed or controlled by the circuitry 1030 (on the communication device side) and/or the circuitry 1080 (on the base station side). Furthermore, any reception and transmission steps may be performed by the transceiver 1020 (on the UE side) and/or the transceiver 1070 (on the base station side) (e.g. by being controlled by the respective circuitry to do so).

### Relay Configurations

In general, the term "***relay configuration***" is to be understood broadly as any setting/configuration of a state or parameter related to relay operations of the relay node and, in particular, related to the transmission(s) of the relay node in which the relay node relays signals to be relayed (in the present disclosure also referred to as relay transmission).

In particular, a relay configuration (such as the default relay configuration and "other" relay configuration(s)) may specify: (i) whether or not the relaying is to be performed; (ii) a transmission power for transmissions of the relaying, (iii) whether a flexible symbol of a slot format is a downlink symbol or an uplink symbol, (iv) whether a flexible slot of the slot format is a downlink slot or an uplink slot, (v) a beam configuration (e.g., a Transmission Configuration Indicator (TCI) as in LTE/NR) for the transmissions of the relaying, and/or (vi) a bandwidth part for the relaying of the signals. It is noted that a relay configuration may specify any number and combination of the above points (i) to (vi), and/or may specify other parameters related to relay transmissions. Usually, at a/each given time, one relay configuration is active, and the relay node performs relay transmissions in accordance with said relay configuration. In accordance with the points (i) to (vi), directly above a relay configuration signalling (default and/or "other") may include, as part of the (default) relay configuration indication, indication indicating of one or more of said above points (i) to (vi).

Regarding the above points (iv) and (v), it is further noted that the present invention is not limited to the case that the granularity of the slot format is in given in terms of slots or symbols. In general, any time duration/interval other than slots or symbol may be used.

In general, the default transmission state may be determined and configured by the gNB according to the traffic. For instance, when an NCR is supposed to relay signals occasionally, the OFF state could be considered as the default state. Dynamic control commands (e.g. relay configuration signalling, but also dynamic commands to change/reconfigure the default state) could then be used to change the NCR operation according to the traffic. If the NCR misses the new state command, the NCR would apply the default configuration. This may save overhead since the default state may be the appropriate state more often than other states. Furthermore, even is not able gNB to determine whether all relay configuration commands have actually been received by the relay, this may allow the gNB to know the relay configuration state of the relay after the end of the validity period(s) of the last commands(s).

In general, any such transmission configuration may be specific for the UL and the DL direction, the frequency band, or the link (backhaul link, C-link, access link). E.g. there may one default transmission configuration for the backhaul link and, a different for the default transmission configuration for the access link. There may be one or more default transmission configuration for the access/backhaul/control link which apply to respective frequency bands, and so forth. The same applies to the "other" relay configurations.

### Default Relay Configuration

The ***default relay configuration*** is indicated by a default relay configuration indication which is included in signalling here termed as "Default Relay Configuration Signalling". The Default Relay Configuration Signalling is generated by the scheduling device, and transmitted by the base station to the relay, which then obtains the default relay configuration indication therefrom. In general, the default state of the relay configuration may be configured semi-statically (e.g., through RRC) or dynamically (e.g., through a DCI). In other words, the Default Relay Configuration Signalling may be an RRC signalling or a DCI. The gNB may e.g. determine the default relay configuration to be relay configuration that the gNB expects to be the appropriate relay configuration more frequently than (any or most) other relay configurations (in order to reduce overhead).

### "Other" Relay Configuration

The term "*Other Relay Configuration*" refers to relay configurations other than (e.g. different from) the default relay configuration. Other relay configurations are indicated by an indication here termed "relay configuration indication", which is included in signalling here termed as "Relay Configuration Signalling". Relay Configuration Signalling is generated by the scheduling device, and transmitted by the base station to the relay, which then obtains the relay configuration indication therefrom. Details of the Relay Configuration Signalling are disclosed in the section "*Relay Configuration Signalling" below.* Since "other relay configurations" are associated with a finite validity period length, they are, in the present disclosure, also referred to as temporary relay configurations.

### Validity Periods & Active Relay Configuration

The default relay configuration refers to the relay configuration that is to be used by the relay for the relaying (in particular for performing the relay transmissions) outside validity periods of relay configurations.

In other words, while in general there will be duration/time periods in which the default relay configuration is valid, the default relay configuration does not have a *configured* finite validity period. The default relay configuration, thus becomes active outside of the validity duration of "other" relay configurations other than the default relay configuration. In particular, since validity periods are finite, the default configuration will become the active relay configuration if the relay does not receive, for a sufficient time duration, further relay configuration signaling and a signalling indicating a new default relay configuration (in which case said new default relay configuration will become active after sufficient time).

More specifically, "other" relay configurations are associated with a finite validity period (e.g., a time interval), in which they are valid/active and (temporarily) override the configured default relay configuration. For instance, the relay node may perform relaying in accordance with the default relay configuration; perform, after receiving a relay configuration signalling, the relaying in accordance with the other relay configuration indicated by the relay configuration signalling; and perform, after the validity period other relay configuration (and if no further relay configuration signalling is received), again in accordance with the default relay configuration. In other words, the transmission configuration of the relay reverts to a default state, given by the default relay configuration, if a new transmission configuration is not set after a defined time period. Said defined time period is given by the validity period(s) of received relay configuration(s).

In particular, the default relay configuration is thus the active relay configuration, if no relay configuration signalling overriding the default relay configuration is received, and relay configuration may only override the default relay configuration (and other relay configurations) for a finite time (i.e. for the length of the validity period). Here, it is noted that the validity period (i.e. the time interval) of another relay configuration is defined in general by a length/duration of the validity period and a reference time point, e.g. the start or end point of the validity period. In general, the length of the validity period and the reference time point may be determined, indicated, obtained, etc. together or in separate steps. It is noted that both the length of the validity period and said reference time point are indications of the validity period of the other relay configuration. In other words, the validity period indication may indicate the length of the validity period and/or indicate a reference time point based on which an absolute position of the validity period can be fixed.

For instance, the base station may configure (e.g. semi-statically) the relay with a validity period length, and the start position of the validity period may be indicated implicitly by the time the relay configuration signalling is received by the relay. For instance, the start of the validity period of a relay configuration may be the start (or said start plus a predetermined offset and/or plus an offset explicitly indicated by the relay configuration signalling) of the next slot after the reception of the relay configuration signalling indicating said relay configuration. Thus there may be two (separate) validity period signalling: (i) a first validity period (length) signalling that includes "*validity length indication*" indicating the length of a particular validity period and/or configuring the length of validity periods of relay configurations, which are received until a new length is configured or which do not include an own indication of a length; and (ii) a second validity period signalling indicating said reference point. A configured length may apply to each "*other relay configuration*" until the length is re-configured. However, the relay may also be configured with multiple lengths, e.g. one for UL relay transmission and another length for DL relay transmissions. Furthermore, it is possible that the configured length applies only in cases where no length is indicated dynamically, e.g. together with the respective relay configuration and/or reference time point. The length of validity periods may be, e.g., indicated as a number of symbols/mini-slots/slots/frames, but the present invention is not limited to any particular time unit in terms of which the indication is performed.

It is further noted that the default configuration state may also be used (immediately) after the NCR is turned on or attached to a new gNB (e.g. when connected to a new/other gNB as part of a handover). It is noted that this turn-on does not refer to a transition from the OFF to the ON state, but to turn-on of the relay device after a complete turn-off, including a turn-off of the MT unit of the relay device.

Usage of a default relay configuration in combination with (finite) validity periods of (dynamic) relay configuration signalling allows the scheduling device to known the actual relay configuration state of the relay after the validity period irrespective of whether the relay has received the relay configuration signalling.

### Relay configurations indicating whether or not the relaying is to be performed

In the following, further details of the case that the relay configurations specify whether or not relaying is to be performed are disclosed. This, in particular, refers to the case that the other relay configuration specifies a different ON or OFF state than the ON or OFF state specified by the default relay configuration.

It is first noted that, in this case, if the active relay configuration specifies that transmission are not to be performed, the relay node may perform the relaying (e.g. in step S1390) of signals by not performing (e.g. any) relay transmissions; whereas, if the active relay configuration specifies that transmission are to be performed, the relay will perform relay transmissions. A relay node that does, at a given time, not perform relaying is also referred to as in the OFF state, and a relay node that performs relaying is referred to in the ON state. Thus, in other words, the relay configuration may specify that whether a NCR-Fwd is supposed to be in the ON state or in the OFF state (while said relay configuration is active). It is noted that the MT of the NCR may remain active even the relay node is in the OFF state (in particular to be able to receive a command which transfers the NCR back in the ON state). Said On and OFF functionality may be provided to control the behavior of the NCR-Fwd e.g. for power control, in particular, to reduce power consumption, and may be similar to or even identical to the ON-OFF functionality of NCR in NR.

In general, the NCR may be configured with a default ON/OFF state (as or as part of the default relay configuration) and one or more lengths of validity time periods/lengths related to relay configuration commands indicating a (temporary) change of the ON/OFF state. For instance, the NCR may be configured with a default ON/OFF state and one time period, after which said default ON/OFF state is applied if no new relay configuration command is configured/received. More specifically, the relay could be configured with one validity period length and use said length for all relay configuration (irrespective of whether they indicate the ON or OFF state), until a new validity length indication is received. However, the present invention is not limited thereto, as in general, different time periods could be defined for the ON and the OFF state. It is noted that, e.g. if the default relay configuration specifies the ON state, relay configuration signalling indicating the ON state may be used in order to override the OFF state of another relay configuration, e.g. in order to revert to the ON state before the end of the validity period of the OFF state.

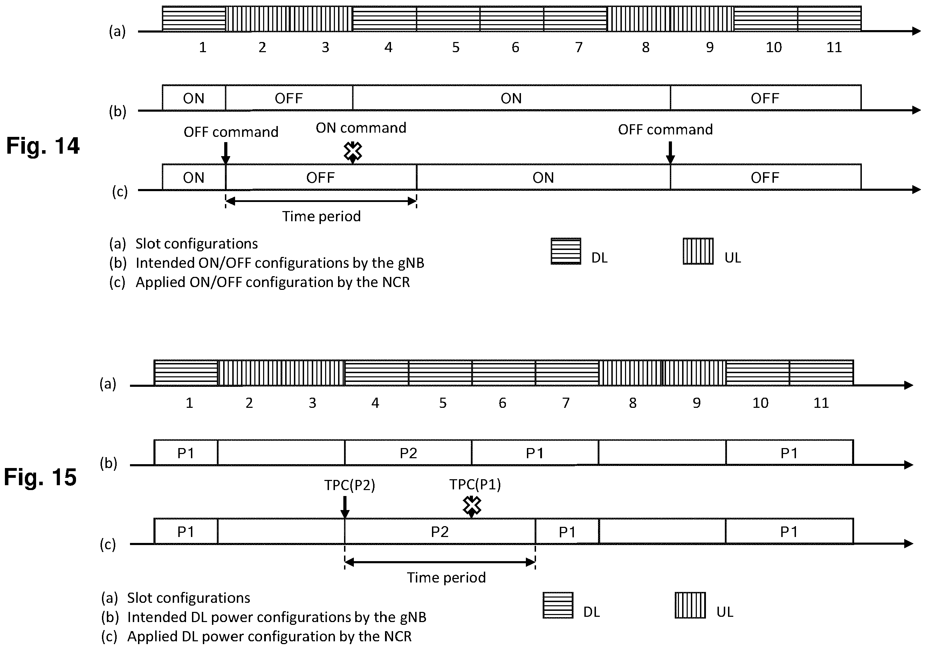

An example, in which the ON state is defined as the default state for the NCR (i.e. the default relay configuration specifies that relay transmission are to be performed), is illustrated in **Fig. 14****.** As in the other figures: row (a) shows the used slot format; row (b) shows the relay configuration intended by the gNB; and row (c) illustrates the relay configuration the relay applies (often under the assumption that a particular signalling indicated by a cross is not received by the relay). In particular, the gNB intends the relay to be in the OFF state in slots 2, 3, and 9 to 11. Furthermore, in the example of Fig. 14, the time period for new commands is defined as 3 slots. In other words, the length of validity periods of relay configuration commands is the length of 3 slots. Said time period, may be configured semi-statically and may apply to (e.g. any) relay configuration command received before a new/other validity length indication is received.

In the present example, the gNB intends to configure ON-OFF states dynamically, by sending ON/OFF commands to the NCR and, thus, transmits an OFF command that applies starting from slot 2. Since this would result in a validity period from slot 2 to slot 4, the gNB also transmits an ON command which applies starting from slot 4. However, as indicated in row (c), the NCR does not receive the new ON command for slot4 and, thus, will apply the OFF state also in slot 4. However, since the default relay configuration specifies the ON state and the length of validity durations is set to 3 slots, the relay applies the ON state after 3 slots from the last received command, i.e., beginning from slot 5. It is noted that arrows indicating the ON and OFF command not necessarily correspond to the time these commands are actually transmitted, but are used to indicate the time point the validity period of the respective command starts.

Thus, as already mentioned above, the NCR applies the default state if, before the end of the validity period, a new state is not configured (i) for the time after said validity period, or (ii) overriding the present temporary state with said new (temporary) state and starting the validity period of said new state. In particular, if relay configuration commands are applied immediately after reception, (i.e. if validity periods of relay configuration signalling start immediately after reception of the respective signalling), the NCR will apply the default state if no relay command is received for the duration of the validity time.

### Relay configurations indicating a transmission power for transmissions of the relaying

In the following, further details of the case that the relay configurations specify a transmission power for transmissions of the relaying are disclosed. This, in particular, refers to the case that the other relay configuration specifies a different transmission power than the transmission power specified by the default relay configuration.

Here the term "*transmission power*" or "*TX power*" refers to the transmission power the relay node is (supposed) to use for performing the relay transmissions. In general, the TX power may be a total TX power to be used for all relay transmissions (e.g. at the same time) or the transmission power to be used for relay transmission to/from a particular entity (other than scheduling device). Different TX powers may be specified for DL relay transmissions and UL relay transmissions.

In general, the NCR may be configured with a default transmission power (as or as part of the default relay configuration) and one or more lengths of validity time periods/lengths related to relay configuration commands indicating a (temporary) change of the transmission power for relaying signals. For instance, the NCR may be configured with a default transmission power and a time period, after which a (e.g. any, or any of some type) temporary relay configuration becomes invalid/inactive and said default transmission power is applied (.e.g. if no new relay configuration command is configured/received during the validity period of said temporary relay configuration and/or until the end of the validity period of said temporary relay configuration). In other words, the length of validity periods of temporary relay configurations is given by said configured time period (i.e. the time period may be a time length, e.g. an integer number of slots or symbols). The default transmission power is thus applied if the time period has expired since the start/beginning of the validity period of a currently temporary relay configuration. It is further noted that the default relay configuration may also be applied if the time period has expired since the reception of the last received Relay Configuration Signalling indicating a temporary relay configuration. In other words, the time period may be the length of the time after which (i.e. starting/counting from the reception time of the last received command) the default relay configuration becomes active. This may e.g. be the case if temporary transmission configurations become active upon/when the respective relay configuration signalling is received, but is not limited thereto. It is further noted that this applies to relay configurations in general and not just the case that the relay configurations are related to the transmission power.

In particulars, the NCR may apply the default transmission power (i.e. may use the default transmission power for transmitting relaying transmissions) if a new/other transmission power configuration is not received before the end of said time period. This is similar to the case that the relay configuration specifies an ON/OFF state (i.e. whether or not to relay), already explained above.

As in the above case of an indication of an ON/OFF state, there may be different validity period lengths for different indication of transmission powers. For instance, there may be one validity period length configured for (dynamic) indications of the default transmission powers and a different validity period length configured for other relay configuration signalling.

In the example shown in **Fig. 15**, the NCR is configured with a default TX power of P1 in DL, and the validity period for relay configurations is 3 slots. Since the gNB intends to configure the relay with the TX power P1 in the DL slots 1, 6, 7, 10 and 11, and with the TX power P2 in the (remaining) DL slots 4 and 5, the gNB transmits a relay configuration signalling (also termed "TPC" for transmission power control), to change the TX power to P2 starting from the beginning of slot 4 and a TPC indicating, to the relay, to apply the TX power to P1 starting from the beginning of slot 6. As indicated in row (c), the NCR receives the TPC to change the TX power to P2 as of slot 4, but misses the TPC to change the TX power to P1 as of slot 6. The NCR thus transmits the relay transmissions in slot 6 with transmission power P2. Starting from the beginning of slot 7, the NCR applies the default DL TX power of P1 since the validity period of the TCP(P2) command has a length of 3 slots and, thus, has expired and no other/new TPC signalling has been received.

In general, the default TX power level could be a reduced/increased value compared to the last received command. In other words, the TPC may indicate a value by which the default or a current transmission power is to be increased/decreased or could be an indication of the absolute value of the transmission power that is to be used. Furthermore, the default TX power could be similar to the above-mentioned OFF state, i.e., the NCR may stop amplifying/relaying the signals (i.e. corresponding to a TX power of zero).

### Relay configurations indicating whether a flexible slot/symbol is a DL or an UL slot/symbol

In the following, further details of the case that the relay configurations specify whether a flexible slot is a DL or an UL slot are disclosed. This, in particular, refers to the case that the other relay configuration specifies a different transmission direction (UL or DL) for a (one or more) flexible slot than the transmission direction specified by the default relay configuration for said slot.

In general, the NCR may be configured with a default DL/UL state (as or as part of the default relay configuration) and one or more lengths of validity time periods/lengths related to relay configuration commands indicating a (temporary) change of the transmission direction of a flexible symbol/slot. For instance, the NCR may be configured with a default DL/UL state for flexible slots/symbols and a (e.g. one) time period, after which the NCR applies the default DL/UL state for the flexible slots/symbols if a new DL/UL state is not configured/received before said time period has expired since the start/beginning of the validity period of a currently active temporary DL/UL state (as already explained above for the case that the default relay configuration specifies a default transmission power). To be specific, said default state may be a (common) state that specifies the same default DL/UL state for each flexible slots/symbols. But in general different default state may also be set for different flexible slots/symbols.

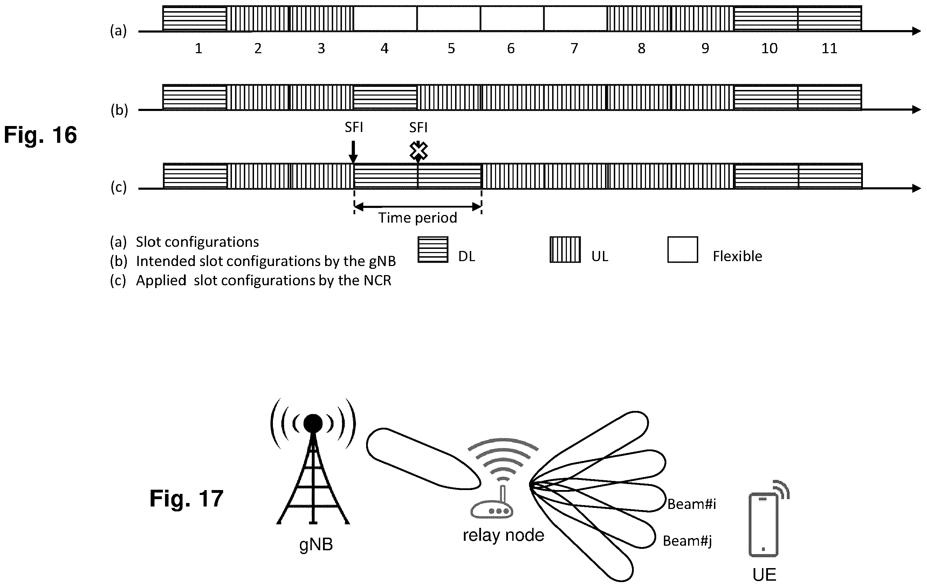

In the example shown in **Fig. 16**, as illustrated in row (a), the NCR is configured with a default UL state for the flexible slots. In particular, slot 1 is a DL slot, slots 2 and 3 are UL slots, slots 4 to 7 are flexible slots, slots 8 and 9 are UL slots, and slots 10 and 11 are DL slots.

As shown in row (b), the gNB intends to inform the NCR that the flexible slot 4 is a DL slot and that the flexible slots 5 to 7 are UL slots. The time period (e.g. the length of validity periods) for the slot configurations is exemplarily assumed to be 2 slots. The gNB thus transmits a relay configuration signalling including an indication (e.g. slot format indicator) indicating that flexible slots are DL slots as of slot 4, and a relay configuration signalling indicating that flexible slots are UL slots as of slot 5.

The NCR receives the first SFI, configuring the upcoming flexible slots for DL. Since, the NCR misses the second SFI, which is supposed to configure slot 5 for UL (i.e. to override the DL-SFI in slot 5), the relay performs relay transmissions in slot 5 under the assumption that this is a DL slot and transmission are to be relayed from the gNB to another entity. However, since the validity period length duration is set to 2 slots, the NCR applies the default UL configuration for the flexible slots 6 and 7.

### Relay configurations indicating a beam configuration for the transmissions of the relaying

In the following, further details of the case that the relay configurations specify a beam configuration for the transmissions of the relaying are disclosed. This, in particular, refers to the case that the other relay configuration specifies a beam configuration than the beam configuration specified by the default relay configuration. A beam configuration indication may be, e.g., a Transmission Configuration Indicator (TCI) as in LTE/NR. In particular the beam configuration may be related to the direction of the beam, as illustrated in **Fig. 17****.**

In general, the NCR may be configured with a default beam configuration (as or as part of the default relay configuration) and one or more lengths of validity time periods/lengths related to relay configuration commands indicating a (temporary) change of the beam configuration. For instance, the NCR may be configured with a default beam (e.g., a TCI) for relaying transmission and a time period, after which said default beam configuration is applied if no new relay configuration command is configured/received before said time period has expired since the start/beginning of the validity period of a currently active temporary beam configuration (as already explained above for the case that the default relay configuration specifies a default transmission power). In other words, the NCR applies the default beam configuration (i.e. uses default the beam configuration for transmitting relaying transmissions) if a new/other beam configuration is not received before the end of said time period. This is similar to the case that the relay configuration specifies an ON/OFF state (i.e. whether or not to relay), already explained above.

In the static deployment scenarios, a certain beam could be used most of the time, which the gNB may determine to be the default beam configuration. However, if this (default) beam is blocked, another beam may be used. For instance in Fig. 17, the NCR may be configured to deliver DL signals using the default Beam#i. When the default Beam#i is blocked, the gNB can configure, by generating and transmitting a corresponding relay configuration signalling, another beam (i.e., Beam#j) for a certain time period, i.e. for the validity duration. The NCR may revert to the default beam afterwards (e.g. automatically if no new other beam configuration is received). The beginning of the time period could be considered from the instance that the beam/link failure is identified or from the reception of the relay configuration signalling indicating the other beam configuration.

In general, when configuring a relay node with a default beam configuration, the default beam may be, e.g., set according to the deployment scenario. When the default beam is blocked, the gNB can configure another beam for the NCR, ensured that the NCR will still switch back to the default beam after the blockage (without additional overhead). Thus, validity duration of a beam configuration may be determined in accordance with the deployment scenario in view of the usual duration a temporary blockage typically exists in said scenario.

### Relay configurations indicating a bandwidth part for the relaying of the signals

In the following, further details of the case that the relay configurations specify a bandwidth part (BWP) for the relaying of the signals. This, in particular, refers to the case that the other relay configuration specifies a different bandwidth for than the bandwidth specified by the default relay configuration. In general, the bandwidth part for the relaying of the signals may be a bandwidth part (e.g. a frequency range) in which the resources for performing the relay transmission are located. In otherwords, when performing relaying transmission in accordance with a BWP or when applying a BWP, the relay may determine the resources for the relaying transmission based on the BWP (in particular, the relay may determine that the resources are in said BWP). The gNB may change the BWP operation (e.g. in which BWP the resources of the relay transmission are located) for the NCR according to the traffic and scheduling of UEs. For that, it may send a BWP change command (e.g. in form of a relay configuration signalling/indication) to the NCR.

In general, the NCR may be configured with a default BWP (as or as part of the default relay configuration) and one or more lengths of validity time periods/lengths related to relay configuration commands indicating a (temporary) change of the BWP. For instance, the NCR may be configured with a default BWP (configuration) and one time period, after which said default BWP is applied if no new BWP configuration is configured/received before said time period has expired since the start/beginning of the validity period of a currently active temporary BWP configuration (as already explained above for the case that the default relay configuration specifies a default transmission power). In other words, the NCR applies the default BWP configuration (i.e. uses default the BWP for transmitting relaying transmissions) if a new/other BWP configuration is not received before the end of said time period. This is similar to the case that the relay configuration specifies an ON/OFF state (i.e. whether or not to relay), already explained above.

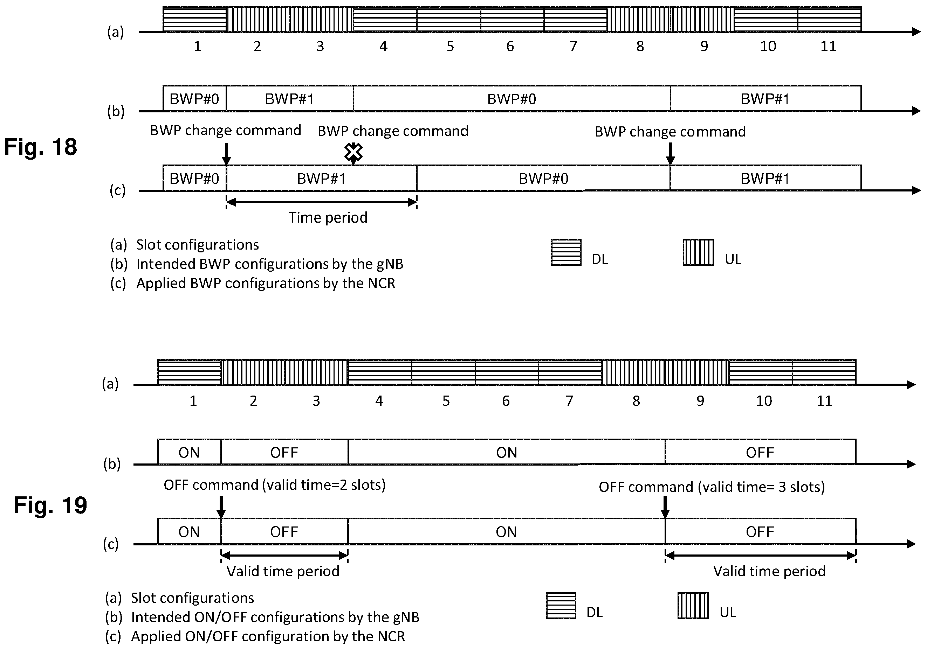

An example for this is illustrated in **Fig. 18**, in which the NCR is exemplarily assumed to be configured with a default BWP#0 and a time period/length of 3 slots. As shown in row (b), the gNB intends to configure the NCR with BWP#1 operation over slots 2 and 3, and slots 9 to 11, and to keep the default BWP configuration, BWP#0, in the remaining slots 1, and 4 to 8. As shown in row (c), the gNB therefore sends a BWP change command that changes the BWP to BWP#1 as of slot 2; a BWP change command that changes the BWP to BWP#0 as of slot 4; and a BWP change command that changes the BWP to BWP#1 as of slot 9. The NCR is assumed to miss the second command to revert to BWP#0. The NCR thus (incorrectly) uses BWP#1 in slot 4. However, since the length of the validity time of the received command is 3 slots, the NCR applies the default BWP#0 starting from slot 5, i.e. 3 slots after the beginning of the validity time of the BWP configuration indicated by the last received command (i.e. the BWP change command changing the BWP to BWP#1 as of slot 2).

### Relay Configuration Signalling & Validity Period Signalling

In the following, further details of relay configuration and validity period signalling are disclosed. The below applies to any relay configuration, in particular relay configurations related to the ON/OFF, power control, flexible slots/symbols, beam, and/or BWP, which have been described above.

Regarding this, it is first to be noted that the relay configuration signalling/command may be a signalling/indication that a particular/which particular relay configuration of a plurality of relay configurations, with which the relay is already configured. This may save overhead as e.g. only an index of the relay configuration that is to be used may be indicated by the command. Furthermore, in general, the Relay Configuration Signalling may be a dynamic signalling (in particular, a DCI) or a semi-static signalling (in particular, an RRC signalling), and/or the Validity Period Signalling may be a dynamic signalling (in particular, a DCI) or a semi-static signalling (in particular, an RRC signalling). In particular when using a dynamic signalling, the valid time period and/or the length of the validity period may e.g. be indicated using a new field in the DCI.

Furthermore, in general, an indication of the valid time period of a (temporary) new state configuration may be carried along the configuration command (e.g. the relay configuration signalling) that indicates the (temporary) relay configuration. In other words, the relay node (e.g. the transceiver1020) may receive the validity period signalling and the relay configuration signalling as a part of a same control signalling. In particular both the length of the validity period and the start/end (i.e. a reference time point) of the validity period may be indicated by the configuration command. For instance, the length may be explicitly indicated by indicating the number of slots/symbols (i.e. a number of a time length unit, the relay node is aware of) the relay configuration indicated configuration command is valid. Furthermore, for instance, the start point of the validity period may be implicitly given via the time the command is received by the relay. E.g. the validity period may being at the start of the next slot/symbols after reception of the relay command. As already mentioned above, a time offset that is to be added to the reception time may also be used.

A dynamic indication of the valid time may provide a flexible state configurations. Furthermore, it may reduce the number of control command signaling, in particular when compared to the case that the length of the validity duration is semi-static, e.g. a reduced number of relay configuration signalling transmissions may be required.

An example of this is illustrated in **Fig. 19****.** In this example, the relay configuration signallings are ON/OFF commands which include respective validity time indication (in particular, indication of the length of the respective validity period). It is note that the slot format (row (a)) and the ON/OFF configuration intended are identical to the example of Fig. 14.

As indicated in row (c), the gNB sends, to the relay node, an OFF command to be applied from slot 2 for the duration of 2 slots. In other words, said signalling includes an OFF command (i.e. an indication that relaying is not to be performed) and an indication that the validity period of said OFF command is from slot 2 to slot 3. In particular said signalling, in contrast to the first command in the example of Fig. 14, includes an indication that the length of the validity duration is 2 slots. The NCR will thus revert back to ON state after two slots, starting from slot 3. As can been seen this reduces the required number of ON/OFF commands, since the second command of Fig. 14 overriding the first (OFF) command after slot 3 is not required. Furthermore, as in the example of the Fig. 14, the gNB sends an OFF command to be applied as of slot 9 for the duration of 3 slots. In other words, in order to obtain the intended ON/OFF configuration, this second OFF command includes an indication that the length of the validity period is 3 slots.

However, the present invention is not limited to a dynamic signalling of the validity period (in particular the validity period length). For instance, each SFI-RNTI, each SFI-index, or each slot format may be associated with a time value/length. Some of the lengths may in general be identical, while usually at least some time lengths associated with different slot format/SFI-RNTIs/SFI-indices will be different.

It is noted that: An SFI is used for configuring the flexible slots/symbols (i.e. is an indication whether a flexible symbol(s)/slot(s) are DL or UL symbol(s)/slot(s). An SFI-RNTI corresponds to an indication which UEs are indicated (i.e. to which UEs a particular SFI applies), which may be transmitted together with the respective SFI and/or e.g. be used to scramble the respective SFI. Furthermore, it is noted that each SFI may carry one or more SFI-index value(s), wherein each SFI-index indicating the transmission direction of different flexible symbol(s)/slot(s) (different than the flexible symbol(s)/slot(s) for which the other included SFI-index indicate the transmission direction).

For instance, a validity period signalling may be a semi-static signalling and/or may include, for each slot format of a plurality of slot formats, an indication indicating a length of validity periods in slots of the slot format. In other words, when/while the relay uses a first slot format, it may determine that the length of validity periods is the length indicated for said first slot format. Furthermore, when the relay receives an indication to change to a second slot format (different from the first), the relay may determine that that the length of validity periods is the length indicated for said second slot format. For instance, an SFI may indicate that a certain slot configuration is applied for x consecutive slots, wherein said number x is given by the validity periodic signalling. In other words, the validity period signalling may associate each of a plurality of SFI-indices (or of a plurality of SFI-RNTIs, or of a plurality of slots formats), the validity time associated with the respective SFI-index (or with respective SFI-RNTI, or with the respective slots format).

In general, the relay may then determine that the length of a validity period of a particular relay configuration signalling is the length indicated by the validity period signalling for the slot format of a slot indicated by the relay configuration signalling. Said slot may be the slot of reception the configuration signalling.

For the SFI-RNTI case, the UE may be configured to monitor several SFI-RNTIs (i.e. by bind decoding specific periodic signalling using the monitored SFI-RNTIs). For instance, one SFI-RNTI may indicate that the indicated slot configuration is valid for 1 slot (i.e. a slot configuration received in signalling is scrambled with said one SFI-RNTI is valid for 1 slot), another SFI-RNTI may indicate that the indicated slot configuration is valid for 2 slots, and so on.

For SFI-index case, several SFI-index values can be carried with a single SFI-RNTI. For instance, one index may be used to indicate a particular slot configuration for only 1 slot, another index may be used to indicate said particular slot configuration for 2 slot, and so on. In other words, the same slot configurations may be indicated by a plurality of SFI-index values, wherein each SFI-index values implies a different validity duration than the other SFI-index values.

### Relay Configuration Reporting

In general, the relay node (e.g. Relay Configuration Circuitry 1035) may generate a relay configuration report including an indication of a current relay configuration and transmit (e.g. the transceiver 1020) the relay configuration report (to the gNB). In correspondence thereto, the gNB may be configured to receive and interpret such reports. A relay configuration report indicates a relay configuration which the relay currently uses for relaying signals. "Currently" here refers e.g. to the time the relay nodes generates and/or transmits the relay report. A relay configuration report may in general indicate more than one relay configuration. For instance, if different relay configuration are used for UL and DL, the relay configuration that currently applies for UL relay transmission and the relay configuration that currently applies to DL relay transmissions. The current state could be related to the ON/OFF sate, the power control/trans mission power, transmission direction of flexible slots/symbols, beam configuration, or the BWP configuration, explained above.

It is noted that the usage of relay configuration reporting may be used in addition to or alternatively to the above-described usage of a default relay configuration and validity time of temporary overriding relay configurations. For instance, according another embodiment, a communication device comprising a transceiver and circuitry is provided. The transceiver, in operation, (i) relays signals; (ii), receives relay configuration signalling, and (iii) transmits a relay configuration report. The circuitry, in operation, (i) obtains, from the relay configuration signalling, an indication of a relay configuration; and (ii) generates a relay configuration report including an indication of a current relay configuration.

### Automatic Relay Configuration Report

In general, the relay may generate the relay configuration report if, within (or for) a predetermined, indicated, and/or preconfigured period (i.e. a time length) no relay configuration signalling is received. In other words, the NCR reports the current transmission configuration state if it does not receive a new state configuration for a predetermined/indicated/preconfigured time period. In general, the length of is time period may be different than the configured length of validity time(s).

In general, the predetermined and/or indicated period may be configured/indicated semi-statically (e.g. via RRC) or dynamically (via DCI), e.g. by the gNB. In other words, the predetermined period may be timer that runs towards zero and that is reset to the predetermined period each time a configuration signalling is received; furthermore, if said time reaches zero, a relay configuration report is transmitted.

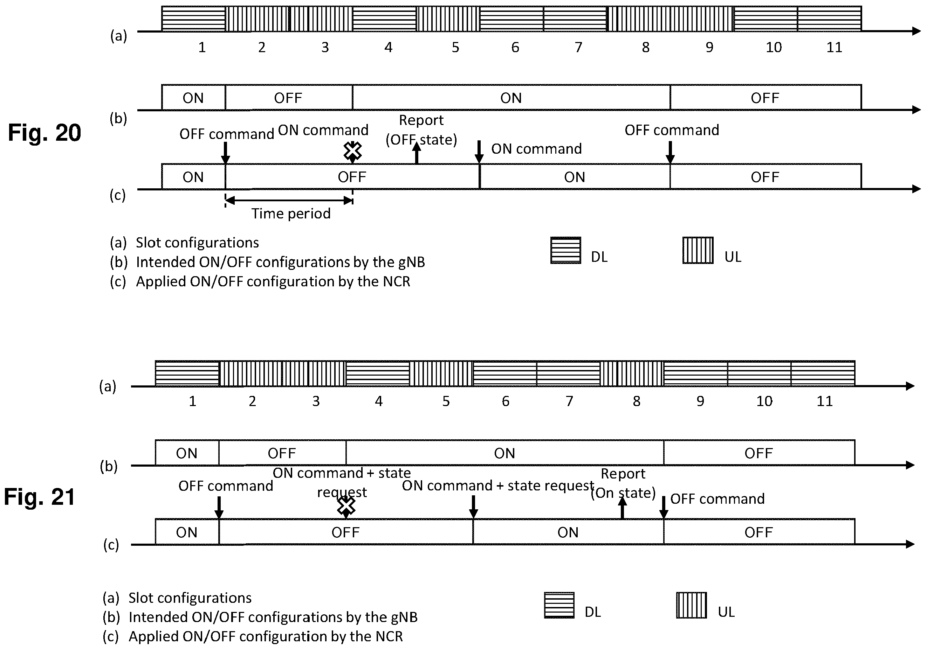

In example of this is illustrated in **Fig. 20****.** In Fig. 20, the NCR is configured to report the current transmission state (i.e., ON/OFF) if it does not receive a new command for more than 2 slots (i.e. the relay is configured with a predetermined period of two slots). The relay is further configured with a validity period length of 3 slots. As indicated in row (c), the NCR receives, at the beginning of or shortly before slot 2, an OFF command which applies from slot 2, and misses the ON command, supposed to make the NCR ON as of slot 4. The NCR will thus report the current state (i.e., OFF state) in slot 5, which is the next available UL slot.

The gNB may thus, in response to receiving the relay configuration report, retransmit the ON command in the next instance, which is in the next DL slot (slot 6), e.g., at the beginning of slot 6. Furthermore, the gNB can optionally retransmit the DL data towards the UEs, which was sent over slot 4 (and to be relayed/amplified, which did not happen due to the missed command), later over slots 6 and/or 7, knowing, due to the relay report, that the NCR did not amplify the signals over slot 4.

### Relay Configuration Report Requesting

In general, the gNB may also request/configure the NCR to report the current transmission configuration state. For instance, the gNB may use such a request to ensure the transmission configuration is received correctly by the NCR.

More specifically, the relay me be configured to receive and interpret a relay configuration report request and to generate, in response to the relay configuration report request, a relay configuration report.

In general, such a request may be a signalling/indication transmitted by the gNB together e.g. with a relay configuration signalling (i.e. as part of the same transmission). In particular, the NCR may be configured semi-statically or indicated dynamically to acknowledge the reception of specific transmission configuration(s). However, a relay configuration report request may also be transmitted in a transmission that does not carry a relay configuration indication. In other words, the NCR may be configured or indicated to report the current transmission configuration.

In the example shown in **Fig. 21**, the gNB intends the relay to be in the OFF state in slots 2, 3, and 9 to 11. The gNB thus transmits an OFF command that applies starting from slot 2. The gNB transmits an ON command which applies starting from slot 4. The gNB also sends an indication for requesting the status report along with this ON commands. As in Fig. 14, the NCR misses the first ON command, so it will not report the status report. The gNB identifies this and sends another ON command, which applies starting from slot 6, together with a status report request. The NCR receives the request and reports the current state to the gNB in slot 8.

### Default Relay Configuration - Periodic Pattern

In general, periodic transmission states (e.g., ON/OFF) associated with active durations may also be configured, and the gNB may dynamically change the active duration of these transmission states. For instance, a default relay configuration may specify a periodic pattern (i.e. periodic in time), of two or more transmission states, wherein each transmission state of the two or more transmission states is associated with an active duration after which said transmission state becomes inactive and a transmission states of the periodic pattern other than said transmission states becomes active. In other words, for a/each given time (time point/time instance), the periodic pattern specifies a (e.g. one) transmission state, and the corresponding sequence of transmission state is periodic pattern that is periodic in time (i.e. that repeats itself after a specific time).

Each of the transmission states may specify (i) whether or not the relaying is to be performed, (ii) a transmission power for transmissions of the relaying, (iii) whether a flexible symbol of a slot format is a downlink symbol or an uplink symbol, (iv) whether a flexible slot of the slot format is a downlink slot or an uplink slot, (v) a beam configuration for the transmissions of the relaying, and/or (vi) a bandwidth part for the relaying of the signals. In other words, each of the transmission states of such a default relay configuration may be a relay configuration as described above.

In general, in the case of that the default relay configuration specifies a periodic pattern of transmission states (or relay configurations), a relay configuration signalling indicating an "other relay configuration" may include an indication to (i) extend, in a particular cycle of the periodic pattern, the active duration of a transmission state of the periodic pattern by the validity period; and (ii) shorten, by the validity period, the active duration of a neighboring transmission state of the periodic pattern.

It is noted that the neighboring transmission state may be a transmission state (e.g. directly) before or (e.g. directly) after, in the periodic pattern, the transmission state to be extended, where before and after refers to the time order of the transmission states given by the periodic pattern. In other words, the neighboring transmission state after (before) a particular transmission state is the transmission state next (previous) transmission state in the periodic pattern, i.e. the transmission state that becomes active when the active period of said particular transmission state is over (which was active until said particular transmission state became active).

The cycle in which the active duration of a transmission state is changed may be indicated explicitly or may be indicated implicitly (e.g. it may be the "current" cycle, i.e. the cycle when the relay configuration signalling is received). In other words, the active time/duration of a transmission state is temporarily changed/overridden (e.g. for one or an indicated number of cycles/instances). Furthermore, it is noted that the amount (which is a time length) of the shortening and extending corresponds to the validity period length.

In general, the transmission state to be extend or the transmission state to be shortened may be implicitly given. For instance, it may (i) transmission state that is active when the relay configuration signalling is received, or (ii) the transmission state that will become active, according to the pattern, after the active duration of transmission state that is active when the relay configuration signalling is received.

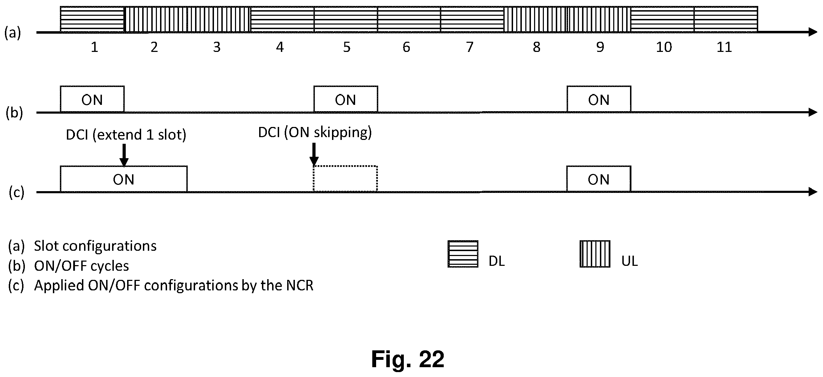

An example in which the default relay configuration is a periodic pattern of transmission states is illustrated in **Fig. 22****.** In the example of Fig. 22, each periodic state is associated with a different ON/OFF state. More specifically, the periodic patter is pattern of two (different) transmission states. It is noted that, in general, separate/different Discontinuous Reception (DRX) configurations may be defined or configured for ON/OFF cycles (i.e. one DRX configuration for the ON transmission state and a different DRX sate for the transmission OFF state). Furthermore, in Fig. 22, the periodic ON/OFF states, with which the NCR is configured, have an active length of 1 slot (ON transmission state/ ON cycle) and 3 slots (OFF transmission state/ OFF cycle). It is noted that the periodic pattern in Fig. 22 repeats itself after 4 slots.

In general, a dedicated DCI may be used (similar to PDCCH skipping) to shorten and/or skip (i.e. "shorten to zero") an ON duration (or OFF duration). A different DCI could be used to extend the ON (or OFF) duration than for extending a duration. In other, a DCI for extending a transmission state may indicate only the transmission state of which the active duration is to be extended, and the transmission state of which the active duration is to be shorten may be given implicitly (e.g. if the transmission state to be extended is already active, the state to be shorten may (always) be the subsequent state since the other neighboring state before the transmission state to be extended can no longer be shortened). Similarly, a DCI for shortening a transmission state may indicate only the transmission state to be shortened and the other state to be extended maybe given implicitly.

In Fig. 22, during the first ON duration, the NCR receives a DCI indicating to extend the ON duration for 1 slot (and to shorten the active duration of the subsequent/next OFF transmission state by the same amount of 1 slot). For the second ON duration, the NCR receives a DCI indicating to skip said ON duration. Thus, the NCR remains in the OFF state in slot 5. It is also noted that relay configuration commands (i.e. in Fig. 22, the DCIs) change the active duration of the transmission states only in one particular cycle. In other words, subsequent instance of the transmission states will have the active duration specified by the periodic pattern, unless another relay configuration signalling that temporarily overrides the active duration is received. E.g. in Fig. 22, the active period for the ON state is 1 slot 9, as specified by the pattern, since no further relay configuration signalling is received after the DCI in slot 1 and the DCI in slot 5.

Using default relay configuration that specifies time-periodic pattern of transmission states (for performing the relaying) may be beneficial for periodic traffic (e.g., SPS, CG, SR, and CQI reports). The provision of dynamic indications for dynamically adapting the active periods may provide flexibility for scheduling, for instance, in order to adapt the relay to a surge of traffic load.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. For example, a relay node, a network node, and a scheduling device may be considered (each) as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a communication device is provided. The communication device includes transceiver and circuitry. The transceiver, in operation: (i) relays signals; (ii) receives default relay configuration signalling; (iii) receives relay configuration signalling; and (iv) receives validity period signalling. The circuitry, in operation: (i) obtains, from the default relay configuration signalling, an indication of a default relay configuration that is to be used for the relaying of the signals by the transceiver outside validity periods; (ii) obtains, from the relay configuration signalling, an indication of another relay configuration; (iii) obtains, from the validity period signalling, an indication of a validity period of the other relay configuration; (iv) controls, in the validity period, the transceiver to perform the relaying in accordance with the other relay configuration; and (v) controls, after an end of the validity period, the transceiver to perform the relaying in accordance with the default relay configuration.

According to a second aspect provided in addition to the first aspect, each of the default relay configuration and the other relay configuration specifies: (i) whether or not the relaying is to be performed; (ii) a transmission power for transmissions of the relaying; (iii) whether a flexible symbol of a slot format is a downlink symbol or an uplink symbol; (iv) whether a flexible slot of the slot format is a downlink slot or an uplink slot; (v) a beam configuration for the transmissions of the relaying, and/or (vi) a bandwidth part for the relaying of the signals.

According to a third aspect provided in addition to the first or second aspect, the transceiver, in operation, receives the validity period signalling and the relay configuration signalling as a part of a same control signalling.

According to a fourth aspect provided in addition to the first or second aspect, in the obtaining of the validity period of the other relay configuration, the circuitry, in operation, obtains, from the validity period signalling, for each slot format of a plurality of slot formats, an indication of a length of validity periods in slots of the slot format, wherein the indication of the length for a slot format of a slot indicated by the relay configuration signalling is obtained as the indication of the validity period of the other relay configuration.

According to a fifth aspect, provided in addition to one of the first to fourth aspect, the circuitry, in operation, generates a relay configuration report including an indication of a current relay configuration; and the transceiver, in operation, transmits the relay configuration report.

According to a sixth aspect, provided in addition to the fifth aspect, the circuitry, in operation, generates the relay configuration report if the transceiver does not receive, within a predetermined period after the reception of the relay configuration signalling, another relay configuration signalling other than the relay configuration signalling.

According to a seventh aspect provided in addition to the fifth aspect, the transceiver, in operation, receives a relay configuration report request; and the circuitry, in operation, generates, in response to the relay configuration report request, the relay configuration report.

According to an eighth aspect provided in addition to one of the first to seventh aspect, the default relay configuration specifies a periodic pattern, of two or more transmission states. Each transmission state of the two or more transmission states is associated with an active duration after which said transmission state becomes inactive and a transmission states of the periodic pattern other than said transmission states becomes active. Furthermore, each transmission state of the two or more transmission states, specifies: (i) whether or not the relaying is to be performed; (ii) a transmission power for transmissions of the relaying; (iii) whether a flexible symbol of a slot format is a downlink symbol or an uplink symbol; (iv) whether a flexible slot of the slot format is a downlink slot or an uplink slot; (v) a beam configuration for the transmissions of the relaying, and/or (vi) a bandwidth part for the relaying of the signals.

According to a ninth aspect provided in addition to the eighth aspect, the circuitry, in operation, obtains, from the relay configuration signalling, as the indication of the other relay configuration, an indication to: (i) extend, in a particular cycle of the periodic pattern, the active duration of a transmission state of the periodic pattern by the validity period, and (ii) shorten, by the validity period, the active duration of a neighboring transmission state of the periodic pattern, wherein the neighboring transmission state is a transmission state before or after, in the periodic pattern, the transmission state to be extended.

According to a tenth aspect, a scheduling device is provided. The scheduling device comprises circuitry and a transceiver. The circuitry, in operation: (i) determines a default relay configuration that a communication device is to use for relaying signals outside validity periods of relay configurations; (ii) generates a default relay configuration signalling including an indication of the default relay configuration; (iii) determines another relay configuration, generates relay configuration signalling including an indication of the other relay configuration; (iv) determines a validity period of the other relay configuration; and (v) generates validity period signalling including an indication of the validity period. The transceiver, in operation: (i) transmits the default relay configuration signalling; (ii) transmits the relay configuration signalling; (iii) transmits the validity period signalling; and (iv) receives relayed signals from the communication device and/or transmits signals to the communication device to be relayed.

According to an eleventh aspect provided in addition the tenth aspect, each of the default relay configuration and the other relay configuration specifies: (i) whether or not the relaying is to be performed; (ii) a transmission power for transmissions of the relaying; (iii) whether a flexible symbol of a slot format is a downlink symbol or an uplink symbol; (iv) whether a flexible slot of the slot format is a downlink slot or an uplink slot; (v) a beam configuration for the transmissions of the relaying, and/or (vi) a bandwidth part for the relaying of the signals.

According to a twelfth aspect provided in addition to the tenth or eleventh aspect, the transceiver, in operation, transmits the validity period signalling and the relay configuration signalling as a part of a same control signalling.

According to a thirteenth aspect, provided in addition to the tenth or eleventh aspect, in the determining of the validity period of the other relay configuration, the circuitry, in operation: (i) determines, for each slot format of a plurality of slot formats, a length of validity periods in slots of the slot format; and (ii) includes, in the generating of the validity period signalling, as the indication of the validity period of the other relay configuration, the indication of the length for a slot format of a slot indicated by the relay configuration signalling.

According to a fourteenth aspect, provided in addition to any one of the tenth to thirteenth aspect, the transceiver, in operation, receives, from the communication device, a relay configuration report; and the circuitry, in operation, obtains, relay configuration report, an indication of a current relay configuration of the communication device.

According to a fifteenth aspect, provided in addition to the fourteenth aspect, the transceiver, in operation, expects the communication device to transmit the relay configuration report if the communication device does not receive, within a predetermined period after the reception of the relay configuration signalling, another relay configuration signalling other than the relay configuration signalling.

According to a sixteenth aspect, provided in addition to the fourteenth aspect, the circuitry, in operation, generates, a relay configuration report request; and the transceiver, in operation, transmits the relay configuration report request.

According to a seventeenth aspect, provided in addition to any one of the tenth to sixteenth aspect, the default relay configuration specifies a periodic pattern, of two or more transmission states. Each transmission state of the two or more transmission states is associated with an active duration after which said transmission state becomes inactive and a transmission states of the periodic pattern other than said transmission states becomes active. Furthermore, each transmission state of the two or more transmission states, specifies: (i) whether or not the relaying is to be performed; (ii) a transmission power for transmissions of the relaying; (iii) whether a flexible symbol of a slot format is a downlink symbol or an uplink symbol; (iv) whether a flexible slot of the slot format is a downlink slot or an uplink slot; (v) a beam configuration for the transmissions of the relaying, and/or (vi) a bandwidth part for the relaying of the signals.

According to a eighteenth aspect, provided in addition to the seventeenth aspect, the circuitry, in operation, includes as the indication of the other relay configuration, in the generating of the relay configuration signalling, an indication to: (i) extend, in a particular cycle of the periodic pattern, the active duration of a transmission state of the periodic pattern by the validity period, and (ii) shorten, by the validity period, the active duration of a neighboring transmission state of the periodic pattern, wherein the neighboring transmission state is a transmission state before or after, in the periodic pattern, the transmission state to be extended.

According to a nineteenth aspect, a method for a communication device is provided. The method includes the steps of: (i) receiving default relay configuration signalling; (ii) obtaining, from the default relay configuration signalling, an indication of a default relay configuration that is to be used for the relaying outside validity periods of relay configurations; (iii) receiving relay configuration signalling; (iv) obtaining, from the relay configuration signalling, an indication of another relay configuration; (v) receiving validity period signalling; (vi) obtaining, from the validity period signalling, an indication of a validity period of the other relay configuration; (vii) relaying, in the validity period, signals in accordance with the other relay configuration; and (viii) relaying, after an end of the validity period, the signals in accordance with the default relay configuration.

Further aspects are provided for the method according to the nineteenth aspect, corresponding to the steps performed in operation by the communication device, provided by any of the second to ninth aspects.

According to a 20th aspect, a method for a scheduling device is provided. The method includes the steps of: (i) determining a default relay configuration that a communication device is to use for relaying signals outside validity periods of relay configurations; (ii) generating a default relay configuration signalling including an indication of the default relay configuration; (iii) transmitting the default relay configuration signalling; (iv) determining another relay configuration; (v) generating relay configuration signalling including an indication of the other relay configuration; (vi) transmitting the relay configuration signalling; (vii) determining a validity period of the other relay configuration; (viii) generating validity period signalling including an indication of the validity period; (ix) transmitting the validity period signalling; and (x) receiving relayed signals from the communication device and/or transmitting signals to the communication device to be relayed.

Further aspects are provided for the method according to the 20th aspect, corresponding to the steps performed in operation by the scheduling device, provided by any of the eleventh to eighteenth aspects.

According to a 21st aspect, an integrated circuit is provided (that may be deployed in a communication system, in particular a relay node). The integrated circuit, in operation, controls a process of a communication device, the process including the steps of: (i) receiving default relay configuration signalling; (ii) obtaining, from the default relay configuration signalling, an indication of a default relay configuration that is to be used for the relaying outside validity periods of relay configurations; (iii) receiving relay configuration signalling; (iv) obtaining, from the relay configuration signalling, an indication of another relay configuration; (v) receiving validity period signalling; (vi) obtaining, from the validity period signalling, an indication of a validity period of the other relay configuration; (vii) relaying, in the validity period, signals in accordance with the other relay configuration; and (viii) relaying, after an end of the validity period, the signals in accordance with the default relay configuration.

For instance, the integrated circuit according to the 21st aspect may comprise: an interface to a transceiver capable of receiving and transmitting signals; and circuitry configured (by hardware or software) to perform: (i) configuring, via said interface, the transceiver to receive default relay configuration signalling; (ii) obtaining, from the default relay configuration signalling (the default relay configuration signalling being e.g. obtained by the circuitry from the transceiver via said interface), an indication of a default relay configuration that is to be used for the relaying outside validity periods of relay configurations; (iii) configuring, via said interface, the transceiver to receive relay configuration signalling; (iv) obtaining, from the relay configuration signalling (which is e.g. obtained via the interface), an indication of another relay configuration; (v) configuring, via said interface, the transceiver to receive validity period signalling; (vi) obtaining, from the validity period signalling (which is e.g. obtained via the interface), an indication of a validity period of the other relay configuration; (vii) configuring, via said interface, the transceiver to relay, in the validity period, signals in accordance with the other relay configuration; and (viii) configuring, via said interface, the transceiver to relay, after an end of the validity period, the signals in accordance with the default relay configuration.

The integrated circuit of the 21st aspect may further implement the corresponding features of any of the second to ninth aspect.

According to a 22nd aspect, an integrated circuit is provided (that may be deployed in a communication, in particular a scheduling device). The integrated circuit, in operation, controls a process of a scheduling device, the process including the steps of: (i) determining a default relay configuration that a communication device is to use for relaying signals outside validity periods of relay configurations; (ii) generating a default relay configuration signalling including an indication of the default relay configuration; (iii) transmitting the default relay configuration signalling; (iv) determining another relay configuration; (v) generating relay configuration signalling including an indication of the other relay configuration; (vi) transmitting the relay configuration signalling; (vii) determining a validity period of the other relay configuration; (viii) generating validity period signalling including an indication of the validity period; (ix) transmitting the validity period signalling; and (x) receiving relayed signals from the communication device and/or transmitting signals to the communication device to be relayed.

For instance, the integrated circuit according to the 22nd aspect may comprise: an interface to a transceiver capable of receiving and transmitting signals; and circuitry configured (by hardware or software) to perform: (i) determining a default relay configuration that a communication device is to use for relaying signals outside validity periods of relay configurations; (ii) generating a default relay configuration signalling including an indication of the default relay configuration; (iii) configuring, via said interface, the transceiver to transmit the default relay configuration signalling; (iv) determining another relay configuration; (v) generating relay configuration signalling including an indication of the other relay configuration; (vi) configuring, via said interface, the transceiver to transmit the relay configuration signalling; (vii) determining a validity period of the other relay configuration; (viii) generating validity period signalling including an indication of the validity period; (ix) configuring, via said interface, the transceiver to transmit the validity period signalling; and (x) configuring, via said interface, the transceiver to receive relayed signals from the communication device and/or transmit signals to the communication device to be relayed.

The integrated circuit of the 22nd aspect may further implement the corresponding features of any of the second to ninth aspect.

According to a 23rd aspect, a program stored on a (non-transitory) storage medium and including code instructions, which, when executed on one or more processors of a user equipment, cause the one or more processors to execute the steps of any of the above mentioned methods (the nineteenth and the 20th aspects and their respective further aspects).

According to a 24th aspect, a communication device comprising a transceiver and circuitry is provided. The transceiver, in operation, (i) relays signals; (ii), receives relay configuration signalling, and (iii) transmits a relay configuration report. The circuitry, in operation, (i) obtains, from the relay configuration signalling, an indication of a relay configuration; and (ii) generates a relay configuration report including an indication of a current relay configuration.

According to a 25th aspect, provided in addition to the 24th aspect, the circuitry, in operation, generates the relay configuration report if the transceiver does not receive, within a predetermined period after the reception of the relay configuration signalling, another relay configuration signalling other than the relay configuration signalling.

According to a 26th aspect provided in addition to the 24th aspect, the transceiver, in operation, receives a relay configuration report request; and the circuitry, in operation, generates, in response to the relay configuration report request, the relay configuration report.

According to further aspects, methods are provided corresponding to the steps performed in operation by the communication device provided by the 24th to 26th aspect. According to further aspects, an integrated circuitry is provided which, in operation, control a process of a communication device, the process including the steps performed in operation by the communication device provided by any of the 24th to 26th aspect.

According to a 27th aspect, a scheduling device comprising transceiver and circuitry is provided. The circuitry, in operation, (i) determines a relay configuration that a communication device is to use for relaying signals; (ii) generates relay configuration signalling including an indication of the relay configuration; and (iii) obtains, from a relay configuration report, a current relay configuration that the communication device is using for relaying signals. The transceiver, in operation, (i) transmits the relay configuration signalling; and (ii) receives the relay configuration report.

According to a 28th aspect, provided in addition to the 27th aspect, the transceiver, in operation, expects the communication device to transmit the relay configuration report if the communication device does not receive, within a predetermined period after the reception of the relay configuration signalling, another relay configuration signalling other than the relay configuration signalling.

According to a 29th aspect, provided in addition to the 27th aspect, the circuitry, in operation, generates, a relay configuration report request; and the transceiver, in operation, transmits the relay configuration report request.

According to further aspects, methods are provided corresponding to the steps performed in operation by the scheduling device provided by the 27th to 29th aspect. According to further aspects, an integrated circuitry is provided which, in operation, control a process of a scheduling device, the process including the steps performed in operation the scheduling device provided by any of the 27th to 29th aspect.

## Claims

1. A communication device comprising:
a transceiver which, in operation:
- relays signals,
- receives default relay configuration signalling,
- receives relay configuration signalling, and
- receives validity period signalling;
circuitry which, in operation:
- obtains, from the default relay configuration signalling, an indication of a default relay configuration that is to be used for the relaying of the signals by the transceiver outside validity periods,
- obtains, from the relay configuration signalling, an indication of another relay configuration,
- obtains, from the validity period signalling, an indication of a validity period of the other relay configuration,
- controls, in the validity period, the transceiver to perform the relaying in accordance with the other relay configuration, and
- controls, after an end of the validity period, the transceiver to perform the relaying in accordance with the default relay configuration.

2. The communication device according to claim 1, wherein
each of the default relay configuration and the other relay configuration specifies:
- whether or not the relaying is to be performed,
- a transmission power for transmissions of the relaying,
- whether a flexible symbol of a slot format is a downlink symbol or an uplink symbol,
- whether a flexible slot of the slot format is a downlink slot or an uplink slot,
- a beam configuration for the transmissions of the relaying, and/or
- a bandwidth part for the relaying of the signals.

3. The communication device according to claim 1 or 2, wherein
the transceiver, in operation, receives the validity period signalling and the relay configuration signalling as a part of a same control signalling.

4. The communication device according to claim 1 or 2, wherein,
in the obtaining of the validity period of the other relay configuration, the circuitry, in operation, obtains, from the validity period signalling, for each slot format of a plurality of slot formats, an indication of a length of validity periods in slots of the slot format, wherein
the indication of the length for a slot format of a slot indicated by the relay configuration signalling is obtained as the indication of the validity period of the other relay configuration.

5. The communication device according to any one of claims 1 to 4, wherein
the circuitry, in operation, generates a relay configuration report including an indication of a current relay configuration; and
the transceiver, in operation, transmits the relay configuration report.

6. The communication device according to claim 5, wherein
the circuitry, in operation, generates the relay configuration report if the transceiver does not receive, within a predetermined period after the reception of the relay configuration signalling, another relay configuration signalling other than the relay configuration signalling.

7. The communication device according to claim 5, wherein
the transceiver, in operation, receives a relay configuration report request; and
the circuitry, in operation, generates, in response to the relay configuration report request, the relay configuration report.

8. The communication device according to any one of claims 1 to 7, wherein
the default relay configuration specifies a periodic pattern, of two or more transmission states, wherein each transmission state of the two or more transmission states:
- is associated with an active duration after which said transmission state becomes inactive and a transmission states of the periodic pattern other than said transmission states becomes active, and
- specifies:
∘ whether or not the relaying is to be performed,
∘ a transmission power for transmissions of the relaying,
∘ whether a flexible symbol of a slot format is a downlink symbol or an uplink symbol,
∘ whether a flexible slot of the slot format is a downlink slot or an uplink slot,
∘ a beam configuration for the transmissions of the relaying, and/or
∘ a bandwidth part for the relaying of the signals.

9. The communication device according to claim 8, wherein
the circuitry, in operation, obtains, from the relay configuration signalling, as the indication of the other relay configuration, an indication to:
- extend, in a particular cycle of the periodic pattern, the active duration of a transmission state of the periodic pattern by the validity period, and
- shorten, by the validity period, the active duration of a neighboring transmission state of the periodic pattern, wherein
the neighboring transmission state is a transmission state before or after, in the periodic pattern, the transmission state to be extended.

10. A scheduling device comprising:
circuitry which, in operation:
- determines a default relay configuration that a communication device is to use for relaying signals outside validity periods of relay configurations,
- generates a default relay configuration signalling including an indication of the default relay configuration,
- determines another relay configuration,
- generates relay configuration signalling including an indication of the other relay configuration,
- determines a validity period of the other relay configuration, and
- generates validity period signalling including an indication of the validity period; and
a transceiver which, in operation:
- transmits the default relay configuration signalling,
- transmits the relay configuration signalling,
- transmits the validity period signalling, and
- receives relayed signals from the communication device and/or transmits signals to the communication device to be relayed.

11. A method for a communication device, the method including the steps of:
receiving default relay configuration signalling;
obtaining, from the default relay configuration signalling, an indication of a default relay configuration that is to be used for the relaying outside validity periods of relay configurations;
receiving relay configuration signalling;
obtaining, from the relay configuration signalling, an indication of another relay configuration;
receiving validity period signalling;
obtaining, from the validity period signalling, an indication of a validity period of the other relay configuration;
relaying, in the validity period, signals in accordance with the other relay configuration; and
relaying, after an end of the validity period, the signals in accordance with the default relay configuration.

12. A method for a scheduling device, the method including the steps of:
determining a default relay configuration that a communication device is to use for relaying signals outside validity periods of relay configurations;
generating a default relay configuration signalling including an indication of the default relay configuration;
transmitting the default relay configuration signalling;
determining another relay configuration;
generating relay configuration signalling including an indication of the other relay configuration;
transmitting the relay configuration signalling;
determining a validity period of the other relay configuration;
generating relay validity period signalling including an indication of the validity period;
transmitting the validity period signalling; and
receiving relayed signals from the communication device and/or transmitting signals to the communication device to be relayed.

13. An integrated circuit, which, in operation, controls a process of a communication device, the process including the steps of:
receiving default relay configuration signalling;
obtaining, from the default relay configuration signalling, an indication of a default relay configuration that is to be used for the relaying outside validity periods of relay configurations;
receiving relay configuration signalling;
obtaining, from the relay configuration signalling, an indication of another relay configuration;
receiving validity period signalling;
obtaining, from the validity period signalling, an indication of a validity period of the other relay configuration;
relaying, in the validity period, signals in accordance with the other relay configuration; and
relaying, after an end of the validity period, the signals in accordance with the default relay configuration.

14. An integrated circuit, which, in operation, controls a process of a scheduling device, the process including the steps of:
determining a default relay configuration that a communication device is to use for relaying signals outside validity periods of relay configurations;
generating a default relay configuration signalling including an indication of the default relay configuration;
transmitting the default relay configuration signalling;
determining another relay configuration;
generating relay configuration signalling including an indication of the other relay configuration;
transmitting the relay configuration signalling;
determining a validity period of the other relay configuration;
generating validity period signalling including an indication of the validity period;
transmitting the validity period signalling; and
receiving relayed signals from the communication device and/or transmitting signals to the communication device to be relayed.
